# EUROPEAN PATENT APPLICATION

(11) **EP 4 750 181 A1**
(43) Date of publication of application: **27.05.2026**
(21) Application number: 24850771.7
(22) Date of filing: 17.07.2024
(51) Int. Cl.: H04W 64/00

(54) **COMMUNICATION METHOD AND APPARATUS**

(30) Priority: 05.08.2023 CN 202310983167; 27.10.2023 CN 202311426760
(71) Applicant: HUAWEI TECHNOLOGIES CO., LTD., Shenzhen 518129 (CN)
(72) Inventor: GUO, Longhua, Shenzhen, Guangdong 518129 (CN); WU, Rong, Shenzhen, Guangdong 518129 (CN)
(74) Representative: Maiwald GmbH
(86) International application number: PCT/CN2024/106035
(87) International publication number: WO 2025/031121

(57) **Abstract**

This application provides a communication method and apparatus, and relates to the field of wireless communication technologies. A first network element receives a first positioning request, where the first positioning request includes identity information of a first terminal that belongs to a public land mobile network PLMN different from that of the first network element. The first network element obtains privacy data of the first terminal via a second network element in the PLMN to which the first terminal belongs, where the privacy data of the first terminal is used to determine whether the first terminal is allowed to undergo ranging/sidelink positioning. The solution of obtaining privacy data of a terminal and determining whether the terminal is allowed to undergo ranging/sidelink positioning when the terminal for which positioning is requested belongs to a PLMN different from that of the first network element is provided.

## Description

### CROSS-REFERENCE TO RELATED APPLICATION

This application claims priorities to Chinese Patent Application No. 202310983167.3, filed with the China National Intellectual Property Administration on August 5, 2023 and entitled "COMMUNICATION METHOD AND APPARATUS", which is incorporated herein by reference in its entirety; and to Chinese Patent Application No. 202311426760.4, filed with the China National Intellectual Property Administration on October 27, 2023 and entitled "COMMUNICATION METHOD AND APPARATUS", which are incorporated herein by reference in their entireties.

### TECHNICAL FIELD

This application relates to the field of wireless communication technologies, and in particular, to a communication method and apparatus.

### BACKGROUND

Ranging/sidelink positioning (Ranging/Sidelink positioning) services can be used to obtain terminal's absolute location or a relative location, angle, and/or distance between two terminals. A positioning request device may initiate a positioning request, in which identity information of a group of terminals can be carried. The group of terminals include a target terminal and at least one reference terminal. Location information of the reference terminal may be known. By means of a ranging/sidelink positioning technology, an absolute location of the target terminal or a relative location, distance, and/or angle between the target terminal and each reference terminal can be determined.

In a ranging/sidelink positioning process, a gateway mobile location center (gateway mobile location center, GMLC) network element receives a positioning request sent by a positioning request device, and performs ranging/sidelink positioning on a group of terminals based on identity information of the group of terminals carried in the positioning request. However, when privacy configuration data of a terminal for which positioning is requested indicates that positioning is not allowed or user's verification for positioning is required, the GMLC network element directly performs ranging/sidelink positioning on the terminal, causing privacy leakage of the terminal.

### SUMMARY

This application provides a communication method and apparatus, to provide a solution of obtaining privacy data of a terminal and determining whether the terminal is allowed to undergo ranging/sidelink positioning when a group of terminals carried in a positioning request belong to different PLMNs.

According to a first aspect, an embodiment of this application provides a communication method. The method may be performed by a first network element or a module (for example, a chip) used in the first network element. For example, the first network element performs the method. The method includes: The first network element receives a first positioning request, where the first positioning request includes identity information of a first terminal that belongs to a PLMN different from that of the first network element, and the first positioning request is for requesting a ranging/sidelink positioning result associated with the first terminal. The first network element obtains privacy data of the first terminal via a second network element in the PLMN to which the first terminal belongs, where the privacy data of the first terminal is used to determine whether the first terminal is allowed to undergo ranging/sidelink positioning. For example, the first network element may be a GMLC.

According to the foregoing method, a solution is provided when the terminal for which positioning is requested belongs to the PLMN different from that of the first network element. When the first network element receives the first positioning request, and needs to undergo ranging/sidelink positioning associated with the first terminal, and the first terminal belongs to the PLMN different from that of the first network element, the first network element may obtain the privacy data of the first terminal via the second network element that belongs to the PLMN the same as that of the first terminal, so that the first network element may determine, based on the obtained privacy data of the first terminal, whether the first terminal is allowed to undergo ranging/sidelink positioning. The first network element may perform ranging/sidelink positioning on the first terminal when the first terminal is allowed to undergo ranging/sidelink positioning. However, when the first terminal does not allow ranging/sidelink positioning, ranging/sidelink positioning is not performed on the first terminal, so that user privacy can be protected.

In a possible design, the first positioning request further includes identity information of a second terminal that belongs to a PLMN the same as that of the first network element, and the first positioning request is for requesting ranging/sidelink positioning results of the first terminal and the second terminal. The first network element obtains privacy data of the second terminal, where the privacy data of the second terminal is used to determine whether the second terminal is allowed to undergo ranging/sidelink positioning.

According to the foregoing method, when the first positioning request further includes the identity information of the second terminal that belongs to the PLMN the same as that of the first network element, because the first network element belongs to the PLMN the same as that of the second terminal, the first network element may obtain the privacy data of the second terminal, so that the first network element may determine, based on the obtained privacy data of the second terminal, whether the second terminal is allowed to undergo ranging/sidelink positioning.

In a possible design, the first network element determines, based on the identity information of the first terminal, the PLMN to which the first terminal belongs. Alternatively, the first network element determines, based on PLMN identity information that corresponds to the first terminal and that is included in the first positioning request, the PLMN to which the first terminal belongs.

According to the foregoing method, a plurality of optional manners in which the first network element determines the PLMN to which the first terminal belongs are provided, so that the first network element can flexibly determine the PLMN to which the first terminal belongs.

In a possible design, the first network element sends first indication information to the second network element, where the first indication information indicates to obtain the privacy data of the first terminal. The first network element receives the privacy data of the first terminal from the second network element.

According to the foregoing method, a specific solution in which the first network element obtains the privacy data of the first terminal via the second network element is provided. Based on this solution, the privacy data of the first terminal can be accurately obtained.

In a possible design, the privacy data of the first terminal includes privacy configuration data of the first terminal.

In a possible design, the first network element determines, in the following manner, whether the first terminal is allowed to undergo ranging/sidelink positioning: If the privacy configuration data of the first terminal indicates that user notification or verification for the positioning is required, the first network element determines that the first terminal is not allowed to undergo ranging/sidelink positioning.

According to the foregoing method, when the privacy configuration data of the first terminal indicates that the user needs to be notified or the user needs to verify whether to allow the positioning, the first network element directly determines that the first terminal is not allowed to undergo ranging/sidelink positioning, so that whether the first terminal is allowed to undergo ranging/sidelink positioning can be quickly determined.

In a possible design, the first network element determines, in the following manner, whether the first terminal is allowed to undergo ranging/sidelink positioning: When the privacy configuration data of the first terminal indicates that user notification or verification for the positioning is required, the first network element sends first privacy check indication information for the first terminal to a third network element, where the first privacy check indication information indicates to perform positioning notification or verification on the first terminal. The first network element receives a privacy check result from the third network element, and determines whether the first terminal is allowed to undergo ranging/sidelink positioning, where the privacy check result represents a result of the positioning notification or verification performed on the first terminal.

According to the foregoing method, when the privacy configuration data of the first terminal indicates that the user needs to be notified or the user needs to verify whether to allow the positioning, the first network element may perform positioning notification or verification on the first terminal via the third network element, so that whether the first terminal is allowed to undergo ranging/sidelink positioning can be accurately determined.

In a possible design, the privacy data of the first terminal includes a privacy check result for the first terminal, and the privacy check result represents a result of positioning notification or verification performed on the first terminal.

According to the foregoing method, the first terminal may accurately determine, based on the privacy check result for the first terminal, whether the first terminal is allowed to undergo ranging/sidelink positioning.

In a possible design, the first network element is the GMLC network element.

According to the foregoing method, because the GMLC network element is a 1^{st} network element through which a positioning request device accesses a core network, the ranging/sidelink positioning can be accurately performed on the terminal based on the GMLC network element.

In a possible design, the third network element is an access and mobility management function (access and mobility management function, AMF) network element, or the third network element is a GMLC network element in a roaming network of the first terminal.

According to the foregoing method, the third network element may be the AMF network element, or when the first terminal is in a roaming scenario, the third network element is the GMLC network element in the roaming network of the first terminal, so that the positioning notification or verification can be accurately performed on the first terminal, to obtain the privacy check result for the first terminal.

According to a second aspect, an embodiment of this application provides a communication method. The method may be performed by a second network element or a module (for example, a chip) used in the second network element. For example, the second network element performs the method. The method includes: The second network element receives first indication information from a first network element, where the first indication information indicates to obtain privacy data of a first terminal; and a first positioning request received by the first network element includes identity information of the first terminal, the first positioning request is for requesting a ranging/sidelink positioning result associated with the first terminal, and the first terminal belongs to a PLMN different from that of the first network element. The second network element sends the privacy data of the first terminal to the first network element, where the privacy data of the first terminal is used to determine whether the first terminal is allowed to undergo ranging/sidelink positioning.

According to the foregoing method, a specific solution in which the first network element obtains the privacy data of the first terminal via the second network element is provided. Based on this solution, the privacy data of the first terminal can be accurately obtained, so that the first network element may determine, based on the privacy data of the first terminal, whether the first terminal is allowed to undergo ranging/sidelink positioning.

In a possible design, the first positioning request further includes identity information of a second terminal that belongs to a PLMN the same as that of the first network element, and the first positioning request is for requesting ranging/sidelink positioning results of the first terminal and the second terminal.

In a possible design, the privacy data of the first terminal includes privacy configuration data of the first terminal.

In a possible design, the privacy data of the first terminal includes a privacy check result for the first terminal, and the privacy check result represents a result of positioning notification or verification performed on the first terminal.

In a possible design, the second network element determines the privacy check result for the first terminal in the following manner:

When privacy configuration data of the first terminal indicates that user notification or verification for the positioning is required, the second network element sends second privacy check indication information for the first terminal to a third network element, where the second privacy check indication information indicates to perform positioning notification or verification on the first terminal. The second network element receives the privacy check result from the third network element.

According to the foregoing method, the second network element performs positioning notification or verification on the first terminal via the third network element, to obtain the privacy check result for the first terminal, so that whether the first terminal is allowed to undergo ranging/sidelink positioning can be accurately determined.

In a possible design, the second network element is a GMLC network element in the PLMN to which the first terminal belongs.

In a possible design, the third network element is an AMF network element, or the third network element is a GMLC network element in a roaming network of the first terminal.

According to a third aspect, an embodiment of this application provides a communication method. The method may be performed by an AMF network element or a module (for example, a chip) used in the AMF network element. For example, the AMF network element performs the method. The method includes: The AMF network element receives privacy check indication information for a first terminal from a positioning network element, where the privacy check indication information indicates to perform positioning notification or verification on the first terminal. The AMF network element skips positioning measurement based on the privacy check indication information. The AMF network element sends a privacy check result to the positioning network element, where the privacy check result represents a result of the positioning notification or verification performed on the first terminal.

According to the foregoing method, after receiving the privacy check indication information for the first terminal from the positioning network element, the AMF network element skips a positioning measurement procedure, and sends the privacy check result to the positioning network element, so that only the positioning notification or verification can be performed on the first terminal, and ranging/sidelink positioning does not need to be performed, thereby reducing unnecessary signaling overheads.

In a possible design, the positioning network element includes a first network element or a second network element. The first network element is a network element that receives a first positioning request, the first positioning request includes identity information of the first terminal, the first positioning request is for requesting a ranging/sidelink positioning result associated with the first terminal, and the first network element belongs to a PLMN different from that of the first terminal. The second network element is a network element in the PLMN to which the first terminal belongs.

According to a fourth aspect, an embodiment of this application provides a communication method. The method may be performed by a first network element or a module (for example, a chip) used in the first network element. For example, the first network element performs the method. The method includes: The first network element receives a first positioning request, where the first positioning request includes identity information of a first terminal that belongs to a PLMN different from that of the first network element, and the first positioning request is for requesting a ranging/sidelink positioning result associated with the first terminal. The first network element obtains privacy configuration data of the first terminal from a network device, where the privacy configuration data is used to determine whether the first terminal is allowed to undergo ranging/sidelink positioning.

According to the foregoing method, when the first network element receives the first positioning request, and needs to undergo ranging/sidelink positioning associated with the first terminal, and the first terminal belongs to the PLMN different from that of the first network element, the first network element may obtain the privacy configuration data of the first terminal from the network device, so that the first network element may determine, based on the obtained privacy configuration data of the first terminal, whether the first terminal is allowed to undergo ranging/sidelink positioning. This application provides a solution when the terminal for which positioning is requested belongs to the PLMN different from that of the first network element, or when the first network element cannot learn of the PLMN to which the first terminal belongs, to improve system performance.

In a possible design, the network device is a preconfigured UDM network element or server, or the network device is a UDM network element in the PLMN to which the first network element belongs.

According to the foregoing method, when the terminal for which positioning is requested belongs to the PLMN different from that of the first network element, or the first network element cannot learn of the PLMN to which the first terminal belongs, the first network element may obtain the privacy configuration data of the first terminal from the preconfigured UDM network element or server, or the UDM network element in the PLMN to which the first network element belongs, so that whether the first terminal is allowed to undergo ranging/sidelink positioning can be determined based on the obtained privacy configuration data.

In a possible design, if the privacy configuration data of the first terminal is not obtained, the first network element determines that the first terminal is not allowed to undergo ranging/sidelink positioning.

According to the foregoing method, when the privacy configuration data of the first terminal is not obtained, it is determined that the first terminal is not allowed to undergo ranging/sidelink positioning, so that a problem of user privacy leakage caused by performing ranging/sidelink positioning on the first terminal when the first terminal is not allowed to be positioned can be avoided.

According to a fifth aspect, an embodiment of this application provides a communication method. The method may be performed by a first network element or a module (for example, a chip) used in the first network element. For example, the first network element performs the method. The method includes: The first network element receives a first positioning request, where the first positioning request includes identity information of at least two terminals; and the first positioning request is for requesting ranging/sidelink positioning results of the at least two terminals. The first network element generates a second positioning request based on a terminal in the at least two terminals that is allowed to undergo ranging/sidelink positioning and a terminal in the at least two terminals that is not allowed to undergo ranging/sidelink positioning, where the second positioning request is for requesting a ranging/sidelink positioning result of the terminal in the at least two terminals that is allowed to undergo ranging/sidelink positioning.

According to the foregoing method, after receiving the first positioning request, the first network element generates the second positioning request depending on whether the at least two terminals are allowed to undergo ranging/sidelink positioning. Therefore, the ranging/sidelink positioning can be accurately and targetedly performed on the terminal. For example, the second positioning request may include only the terminal that is allowed to undergo ranging/sidelink positioning. In this case, the ranging/sidelink positioning may be performed only on the terminal that is allowed to undergo ranging/sidelink positioning.

In a possible design, the second positioning request does not include identity information of the terminal in the at least two terminals that is not allowed to undergo ranging/sidelink positioning.

According to the foregoing method, because the terminal that is not allowed to undergo ranging/sidelink positioning cannot be positioned, the second positioning request does not include the identity information of the terminal in the at least two terminals that is not allowed to undergo ranging/sidelink positioning, so that a data amount of identity information carried in the second positioning request can be reduced, and signaling overheads can be reduced.

In a possible design, the first network element sends a positioning response message to a positioning request device, where the positioning response message includes a positioning failure cause parameter of the terminal in the at least two terminals that is not allowed to undergo ranging/sidelink positioning.

According to the foregoing method, the first network element reports, to the positioning request device, the positioning failure cause parameter of the terminal that is not allowed to undergo ranging/sidelink positioning, so that the positioning request device can learn of a cause of a positioning failure of the terminal.

According to a sixth aspect, an embodiment of this application provides a communication method. The method may be performed by a first network element or a module (for example, a chip) used in the first network element. For example, the first network element performs the method. The method includes: The first network element sends a second positioning request to an AMF network element, where the second positioning request includes identity information of at least two terminals that a positioning request device requests to position, and the second positioning request is for requesting ranging/sidelink positioning results of the at least two terminals. The first network element sends a positioning response message to the positioning request device, where the positioning response message includes a ranging/sidelink positioning result of a terminal in the at least two terminals that is allowed to undergo ranging/sidelink positioning, and a positioning failure cause parameter of a terminal in the at least two terminals that is not allowed to undergo ranging/sidelink positioning.

According to the foregoing method, after receiving the first positioning request, the first network element generates the second positioning request depending on whether the at least two terminals are allowed to undergo ranging/sidelink positioning. When reporting the positioning response message to the positioning request device, the first network element reports only the ranging/sidelink positioning result of the terminal that is allowed to undergo ranging/sidelink positioning, to avoid privacy leakage of the terminal that is not allowed to be positioned. In addition, the first network element reports, to the positioning request device, the positioning failure cause parameter of the terminal that is not allowed to undergo ranging/sidelink positioning, so that the positioning request device can learn of a cause of a positioning failure of the terminal.

According to a seventh aspect, an embodiment of this application provides a communication method. The method may be performed by a first network element or a module (for example, a chip) used in the first network element. For example, the first network element performs the method. The method includes: The first network element receives a first positioning request, where the first positioning request includes identity information of at least two terminals, and the first positioning request is for requesting ranging/sidelink positioning results of the at least two terminals. The first network element sends fourth privacy check indication information for a candidate terminal in the at least two terminals to a fourth network element, where the fourth privacy check indication information indicates to perform positioning notification or verification on the candidate terminal; and privacy configuration data of the candidate terminal indicates that user notification or verification for the positioning is required. The first network element receives a privacy check result from the fourth network element, where the privacy check result represents a result of the positioning notification or verification performed on the candidate terminal.

According to the foregoing method, after receiving the first positioning request, for the candidate terminal in the at least two terminals that request to be positioned, the first network element initiates privacy check on the candidate terminal (for example, the first network element sends the fourth privacy check indication information to the fourth network element in the foregoing method), to determine whether the terminal for which positioning is requested in the first positioning request allows the positioning, and avoid privacy leakage caused by directly positioning the terminal when a privacy configuration of the terminal indicates that the positioning is not allowed or the user needs to verify whether to allow the positioning; and when a positioning request is performed on a plurality of terminals in the first positioning request, whether each terminal is allowed to be positioned is separately determined, so that positioning termination caused because a single terminal is not allowed to be positioned can also be avoided.

In a possible design, the at least two terminals include a second terminal, and the second terminal and the first network element belong to a same public land mobile network PLMN. The first network element obtains privacy configuration data of the second terminal. The first network element determines, as a candidate terminal based on the privacy configuration data of the second terminal, the second terminal whose privacy configuration data indicates that user notification or verification for the positioning is required.

According to the foregoing method, the first network element initiates privacy check for the second terminal whose privacy configuration data indicates that the user needs to be notified or the user needs to verify whether to allow the positioning, so that for this type of terminal for which the user needs to be notified or the user needs to verify whether to allow the positioning, whether to allow the positioning can be accurately determined, thereby ensuring normal execution of a positioning procedure, and avoiding user privacy leakage.

In a possible design, the first network element determines a positioning initiation terminal, where the positioning initiation terminal is a terminal that performs an initiated ranging/sidelink positioning service, and the positioning initiation terminal is a terminal in the at least two terminals that is allowed to undergo ranging/sidelink positioning.

According to the foregoing method, the first network element determines the positioning initiation terminal from the terminals that are allowed to undergo ranging/sidelink positioning. This can avoid positioning termination caused because a single terminal in the at least two terminals that request to be positioned is not allowed to be positioned.

In a possible design, the first network element determines, as the positioning initiation terminal, a terminal in the at least two terminals that is allowed to undergo ranging/sidelink positioning and obtains address information of a serving AMF network element.

In a possible design, the first network element sends a privacy notification service message for the candidate terminal to the fourth network element, where the privacy notification service message includes identity information of the candidate terminal and the fourth privacy check indication information.

According to the foregoing method, the first network element may send the fourth privacy check indication information to each candidate terminal via the privacy notification service message, to accurately determine whether the candidate terminal is allowed to undergo ranging/sidelink positioning.

In a possible design, the fourth network element is a serving access and mobility management function AMF network element of the candidate terminal, or the fourth network element is a GMLC network element in a roaming network of the candidate terminal.

According to an eighth aspect, this application further provides a communication apparatus. The communication apparatus has a function of implementing the method according to any one of the first aspect to the seventh aspect or any possible design of the first aspect to the seventh aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing corresponding functions of the terminal device in the foregoing methods. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device like a network device. The interface circuit may alternatively be a transceiver. The transceiver may include a transmitter and a receiver. The transmitter and the receiver may be different devices, or may be a same device but can implement different functions.

In a possible design, the communication apparatus includes corresponding functional modules, respectively configured to implement steps in the foregoing methods. The function may be implemented by hardware, or may be implemented by executing corresponding software by hardware. The hardware or software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the methods provided in the first aspect to the seventh aspect. Details are not described herein again. The communication unit (or the communication module) may alternatively be a transceiver unit (or a transceiver module). The transceiver unit may include a sending unit and a receiving unit. The sending unit and the receiving unit may be different units, or may be a same unit but can implement different functions.

The communication apparatus may be a terminal device or a chip or a chip system in the terminal device. If the communication apparatus is the terminal device, the transceiver may be a radio frequency transceiver component in the terminal device. If the communication apparatus is the chip or the chip system disposed in the terminal device, the transceiver may be a communication interface in the chip or the chip system. The communication interface is connected to the radio frequency transceiver component in the terminal device, to implement information receiving and sending via the radio frequency transceiver component.

According to a ninth aspect, a computer-readable storage medium is provided. The computer-readable storage medium stores a computer program or instructions. When the computer program or the instructions are executed by a processor, the method in any one of the first aspect to the seventh aspect or any possible design of the first aspect to the seventh aspect is implemented.

According to a tenth aspect, a computer program product storing instructions is provided. When the instructions are run by a processor, the method in any one of the first aspect to the seventh aspect or any possible design of the first aspect to the seventh aspect is implemented.

According to an eleventh aspect, a communication apparatus is provided. The communication apparatus includes a processor, and may further include a storage medium. The storage medium stores instructions. When the instructions are executed by the processor, the processor is configured to implement the method according to any one of the first aspect to the seventh aspect or any possible design of the first aspect to the seventh aspect. The communication apparatus may be a chip system. The chip system may include a chip, or may include a chip and another discrete device.

According to a twelfth aspect, a communication system is provided. The communication system includes the first network element according to the first aspect, the second network element according to the second aspect, and the AMF network element according to the third aspect.

According to a thirteenth aspect, this application further provides a chip, including a processor. The processor is coupled to a memory, and is configured to: read and execute program instructions stored in the memory, to cause the chip to implement the method according to any one of the first aspect to the seventh aspect or any possible design of the first aspect to the seventh aspect.

For each of the eighth aspect to the thirteenth aspect and technical effects that can be achieved in each aspect, refer to the descriptions of the technical effects that can be achieved in any one of the first aspect to the seventh aspect or the possible solutions in each aspect. Details are not described herein again.

### BRIEF DESCRIPTION OF DRAWINGS

FIG. 1 is a schematic of an architecture of a communication system according to an embodiment of this application;
FIG. 2 is a diagram of initiating a positioning request according to an embodiment of this application;
FIG. 3 to FIG. 14A and FIG. 14B are schematic flowcharts of communication methods according to embodiments of this application;
FIG. 15 is a diagram of a structure of a communication apparatus according to an embodiment of this application; and
FIG. 16 is a diagram of a structure of a communication apparatus according to an embodiment of this application.

### DESCRIPTION OF EMBODIMENTS

A communication method provided in this application may be applied to various communication systems, for example, an internet of things (internet of things, IoT), a passive internet of things (passive IoT, P-IoT; or ambient IoT, A-IoT), a semi-passive internet of things (semi-passive IoT), a semi-active internet of things (semi-active IoT), an active internet of things (active IoT), a narrowband internet of things (narrowband internet of things, NB-IoT), a long term evolution (long term evolution, LTE) system, a 5th generation (5th generation, 5G) communication system, a hybrid architecture of LTE and 5G, or a new communication system emerging in 6G or future communication development. Alternatively, the communication system may be a machine-to-machine (machine-to-machine, M2M) network, a machine-type communication (machine-type communication, MTC) network, or another network.

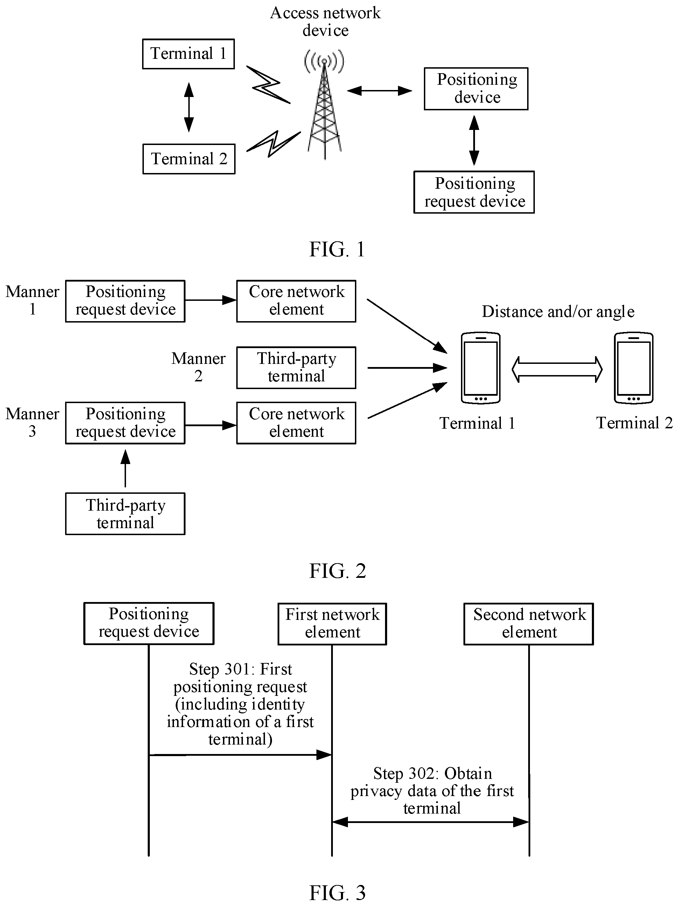

FIG. 1 is a diagram of a possible architecture of a communication system applicable to an embodiment of this application. The communication system includes at least two terminals, an access network device, a positioning device, and a positioning request device.

The positioning request device may be one or more of a core network element (network function, NF), an application function entity (application function, AF), and a positioning client. The at least two terminals may communicate with each other over a sidelink, and the at least two terminals may be located in a same PLMN, or the at least two terminals may be located in different PLMNs. Sidelink communication is a communication manner in which devices directly communicate with each other without a need of forwarding by a base station in a wireless communication network. The sidelink communication may be used for direct communication between devices, or may be used for communication between a device and a vehicle, for example, device-to-device (Device-to-Device, D2D) communication and vehicle-to-everything (vehicle-to-everything, V2X) communication.

For example, the positioning device may be a network element in a core network. The positioning request device may initiate a positioning request to the network element in the core network, where the positioning request is for requesting ranging/sidelink positioning results of the at least two terminals; and the network element in the core network communicates with the at least two terminals via the access network device, and returns the ranging/sidelink positioning results of the at least two terminals to the positioning request device.

In embodiments of this application, the positioning request may be initiated in a plurality of different manners. As shown in FIG. 2, in Manner 1, the positioning request device may actively send a positioning request to a core network element. Manner 2: After receiving a request from a third-party terminal (a terminal other than a terminal 1 and a terminal 2 in FIG. 2), the positioning request device sends a positioning request to a core network element. Manner 3: A third-party terminal sends a positioning request to a terminal 1 or a terminal 2. The third-party terminal may communicate with the terminal 1 or the terminal 2 over a sidelink.

The terminal may be a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer with a wireless transceiver function, a wearable device, a vehicle, an urban air transportation vehicle (like an uncrewed aerial vehicle or a helicopter), a ship, a robot, a mechanical arm, a smart home device, or the like.

The access network device is configured to implement an access-related function, may provide a network access function for an authorized user in a specific area, and can determine transmission links with different quality based on a user level, a service requirement, and the like, to perform transmission of user data. The access network device forwards a control signal and user data between the terminal and the core network. The access network device may be a device that provides access for the terminal, and may include a radio access network (radio access network, RAN) device and a wired access network device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of a device having a base station function may be different. For example, in a 5G system, the device is referred to as a RAN or a next-generation base station (next-generation node base station, gNB). In a long term evolution (long term evolution, LTE) system, the device is referred to as an evolved NodeB (evolved NodeB, eNB or eNodeB).

The access network device and the terminal may be at a fixed location, or may be mobile. The access network device and the terminal may be deployed on land, including an indoor device or an outdoor device, a handheld device, or a vehicle-mounted device; or may be deployed on a water surface; or may be deployed on a plane, a balloon, and a satellite in the air. An application scenario of the access network device and the terminal is not limited in embodiments of this application.

The core network is responsible for maintaining subscription data of a mobile network, and provides session management, mobility management, policy management, security authentication, and another function for the terminal. The core network includes but is not limited to one or more of the following network elements: a UDM network element, a unified data repository (unified data repository, UDR) network element, a policy control function (policy control function, PCF) network element, a session management function (session management function, SMF) network element, an AMF network element, a network repository function (network repository function, NRF) network element, an authentication server function (authentication server function, AUSF) network element, a network exposure function (network exposure function, NEF) network element, a GMLC network element, a user plane function (user plane function, UPF) network element, and a location management function (Location Management Function, LMF) network element.

The AMF network element is mainly responsible for mobility management in the mobile network, such as terminal location update, registration of a terminal with a network, and terminal handover.

The SMF network element is mainly responsible for session management in the mobile network, for example, session establishment, modification, and release. A specific function is, for example, allocating an internet protocol (internet protocol, IP) address to the terminal, or selecting a UPF that provides a packet forwarding function.

The UPF network element is mainly responsible for forwarding and receiving terminal data, and may receive the terminal data from a data network, and transmit the terminal data to the terminal via the access network device; or may transmit user plane data from the terminal to a target network.

The UDM network element includes functions such as performing of subscription data management, and terminal access authorization.

The UDR network element includes functions such as storage and retrieval of subscription data, policy data, application data, and other types of data.

The NEF network element is mainly for capability supporting and event exposure.

The AF network element transfers a requirement of an application side on a network side, for example, a QoS requirement or terminal status event subscription. The AF may be a third-party functional entity, or may be an operator-deployed application service, for example, an IP multimedia subsystem (IP Multimedia Subsystem, IMS) voice call service.

The PCF network element mainly supports providing a unified policy framework to control a network behavior, and providing a policy rule for a control layer network function, and is responsible for obtaining policy decision-related subscription information of the terminal. The PCF network element may provide, for the AMF network element and the SMF network element, a policy, for example, a QoS policy or a slice selection policy.

The NRF network element may be configured to: provide a network element discovery function, and provide, based on a request of another network element, network element information corresponding to a network element type. The NRF further provides network element management services such as network element registration, update, and deregistration and network element status subscription and push.

The AUSF network element is responsible for performing authentication on the terminal and verifying validity of the terminal.

The GMLC network element is a gateway mobile location center, and is configured to support a location service in a mobile network. The positioning request device accesses a 1^{st} network element of the core network device, and executes a registration authentication task. The GMLC network element may be an independent network element in a core network device or may be included in an NEF network element, and may support the location service in the mobile network, provide location information for a mobile terminal, and ensure security of the location information.

Effects and functions of the GMLC may include:
1. Location service support: The GMLC supports the location service in the mobile network and can provide the location information of the mobile terminal.
2. Location request processing: The GMLC can process location requests, including quality of service-based location requests and emergency location requests.
3. Location information processing: The GMLC can process the location information, including location calculation, location verification, and location reporting.
4. Location information storage: The GMLC can store location information, including location reports and historical location information.
5. Location information transmission: The GMLC may transmit the location information to another network element, for example, a home location register (home location register, HLR), a visitor location register (visitor location register, VLR), or a mobile switching center (mobile switching center, MSC).
6. Location information security: The GMLC ensures the security of the location information, including confidentiality, integrity, and availability of the location information.

A location management function (location management function, LMF) network element is mainly responsible for managing location information of a mobile user, so that a communication request of the user can be correctly routed and transferred in a network.

The AF network element, the UDM network element, the UDR network element, the PCF network element, the SMF network element, the AMF network element, the NRF network element, the AUSF network element, the NEF network element, the UPF network element, the GMLC network element, and the LMF network element may also be respectively referred to as AF, UDM, UDR, PCF, SMF, AMF, NRF, AUSF, NEF, UPF, GMLC and LMF for short.

It may be understood that the network element may also be referred to as a "device", an "entity", or the like. The foregoing network elements or functions may be network elements in a hardware device, may be software functions running on dedicated hardware, or may be virtualized functions instantiated on a platform (for example, a cloud platform). In a possible implementation method, the foregoing network elements or functions may be implemented by one device, or may be jointly implemented by a plurality of devices, or may be implemented by one functional module in one device. This is not specifically limited in embodiments of this application.

It should be understood that FIG. 1 is merely an example of an applicable communication system architecture, and an actually applied communication system architecture may include more or fewer network elements than those in FIG. 1. In embodiments of this application, names of the foregoing used network elements may change while functions of the network elements may remain the same in a future communication system.

Ordinal numbers such as "first" and "second" in this application are intended to distinguish between a plurality of objects, and are not intended to limit sizes, content, a sequence, a time sequence, priorities, importance degrees, or the like of the plurality of objects. For example, a first network element and a second network element are merely used to distinguish between different network elements, but do not indicate different priorities, importance degrees, or the like of the two network elements; and a first positioning request and a second positioning request are merely used to distinguish between different request messages, but do not indicate that different message content, message priorities, importance degrees, or the like of the two requests.

The character "/" in this application may indicate an "and/or" relationship between associated objects. For example, performing ranging/sidelink positioning on the terminal includes performing ranging on the terminal, performing sidelink positioning on the terminal, and performing ranging and sidelink positioning on the terminal.

"Sidelink positioning" in this application may also be referred to as side-chain positioning. Terminals may communicate with each other over a sidelink (sidelink, SL), so that the terminal can perform positioning interaction with another terminal based on the sidelink communication, to determine positioning information of the terminal. For example, when the sidelink positioning is performed on a target terminal, and location information of at least one reference terminal is known, the target terminal may perform sidelink communication with the at least one reference terminal, to determine positioning information of the target terminal.

"Ranging" in this application may be measuring a relative location between terminals based on sidelink communication between the terminals. For example, a target terminal determines a relative location between the target terminal and each reference terminal by communicating with at least one reference terminal, for example, determines a distance and/or an angle between the target terminal and each reference terminal.

"Privacy configuration data" in this application may be user privacy-related data stored in the UDM network element, so that a network operator and a service provider perform data processing and sharing based on a user privacy configuration. For example, the privacy configuration data in this application may be positioning-related configuration data. For example, the privacy configuration data indicates that positioning is not allowed; positioning is allowed without user notification; positioning is allowed with user notification; positioning requires user notification and verification, and positioning is allowed only if user authorization is granted or there is no user response; or positioning requires user notification and verification, and positioning is allowed only if user authorization is granted.

"Privacy check result" in this application may indicate that privacy check needs to be initiated on a terminal when privacy configuration data of the terminal indicates that user notification or verification for the positioning is required. The privacy check process may include notifying a user of positioning, or verifying with the user whether to allow positioning. The privacy check result represents a result of the positioning notification or verification performed on the terminal.

"Privacy data" in this application may include privacy configuration data or a privacy check result.

The following describes technical solutions in embodiments of this application with reference to the accompanying drawings in embodiments of this application.

### Embodiment 1

In Embodiment 1, a solution for determining whether a terminal is allowed to undergo ranging/sidelink positioning is provided. In this solution, a first positioning request may further include identity information of a PLMN to which the first terminal belongs, and a first network element may determine, based on the identity information of the PLMN to which the first terminal belongs, that the first terminal belongs to a second PLMN. The first network element obtains privacy data of the first terminal via a second network element in the PLMN to which the first terminal belongs.

FIG. 3 is a schematic flowchart of a communication method according to an embodiment of this application. The communication method may include the following steps.

Step 301: A positioning request device sends a first positioning request. Correspondingly, the first network element receives the first positioning request.

Optionally, the first network element may be a GMLC network element.

The first positioning request may be a positioning request initiated by the positioning request device. For example, the positioning request device may be one or more of a network element NF, an application server, or a positioning client in a core network.

Optionally, the first positioning request includes identity information of the first terminal, the first terminal may belong to a PLMN different from that of the first network element, and the first positioning request is for requesting a ranging/sidelink positioning result associated with the first terminal.

In this embodiment of this application, the identity information of the terminal included in the first positioning request may include a plurality of different types of identity information. For example, the identity information of the terminal may be a subscription permanent identifier (subscription permanent identifier, SUPI) or a generic public subscription identifier (generic public subscription identifier, GPSI).

The SUPI may have a plurality of different formats. For example, the SUPI may be in an international mobile subscriber identity (international mobile subscriber identity, IMSI) format. The SUPI in the IMSI format includes a mobile country code (mobile country code, MCC), a mobile network code (mobile network code, MNC), and a mobile subscriber identification number (mobile subscriber identification number, MSIN). Alternatively, the SUPI may be in a network access identifier (network access identifier, NAI) format. For example, the NAI format may be username@realm, where username may be a character string, a mobile phone number, an IMSI, or the like defined by an operator, and @realm may be a domain name and may be defined by the operator.

The GPSI is a public identifier for identifying a subscriber inside and outside a 3rd generation partnership project (3rd generation partnership project, 3GPP) system. The GPSI is subscription data of the SUPI. A GPSI format may be a mobile subscriber ISDN number (mobile subscriber ISDN number, mobile subscriber ISDN number), and a numbering format of the GPSI includes the following three parts: a country code (country code, CC), a national destination code (national destination code, NDC) (which may be a network access number, and a plurality of NDCs may be allocated to each PLMN), and a subscriber number (subscriber number, SN); or a GPSI format may be an external identifier with reference to the NAI format.

During implementation, when the identity information of the terminal included in the first positioning request information is the SUPI in the IMSI format, the first positioning request information may not carry the identity information of the PLMN to which the terminal belongs. It should be noted that, when the identity information of the terminal is the SUPI in the IMSI format, the PLMN to which the terminal belongs may be determined via the SUPI in the IMSI format.

When the identity information of the terminal included in the first positioning request information is the SUPI in the NAI format or the GPSI, optionally, the first positioning request information carries the identity information of the PLMN to which the terminal belongs.

For example, the identity information (PLMN ID) of the PLMN may be MCC+MNC, or may be a PLMN name in a character form. This is not limited in embodiments of this application.

In a possible implementation, the first network element determines, based on the identity information of the first terminal, the PLMN to which the first terminal belongs; or the first network element determines, based on PLMN identity information that corresponds to the first terminal and that is included in the first positioning request, the PLMN to which the first terminal belongs.

For example, if the identity information of the first terminal is the SUPI in the IMSI format, because the SUPI in the IMSI format includes MCC+MNC+MSIN, the first network element may determine, based on MCC+MNC in the identity information of the first terminal, the PLMN to which the first terminal belongs; if the identity information of the first terminal is the SUPI in the NAI format, because username in an NAI is information defined by the operator and the domain name in the NAI is also defined by the operator, and the operator may define a username field or the domain name as the identity information of the PLMN, the first terminal may determine, based on the username field or the domain name in the NAI, the PLMN to which the first terminal belongs; or if the identity information of the first terminal is the GPSI, the first positioning request further includes the identity information of the PLMN to which the first terminal belongs, and the first network element may determine, based on the identity information of the PLMN to which the first terminal belongs, the PLMN to which the first terminal belongs.

Step 302: The first network element obtains the privacy data of the first terminal via the second network element in the PLMN to which the first terminal belongs.

The privacy data is used to determine whether the first terminal is allowed to undergo ranging/sidelink positioning.

In this embodiment of this application, the first positioning request initiated by the positioning request device is for performing ranging/sidelink positioning on a terminal, or may be for performing ranging/sidelink positioning on a group of terminals. Optionally, the first positioning request includes identity information of at least two terminals, the at least two terminals include the first terminal and a second terminal, and the second terminal belongs to a PLMN the same as that of the first network element; and the first positioning request is for requesting ranging/sidelink positioning results of the at least two terminals.

The PLMN to which the second terminal belongs may be determined based on identity information of the second terminal or PLMN identity information corresponding to the second terminal that is included in the first positioning request. For a specific determining manner, refer to the foregoing manner of determining the first PLMN to which the first terminal belongs.

It should be noted that there may be one or more first terminals and one or more second terminals. This is not limited in embodiments of this application.

For example, the first request message carries UE IDs (identities, identities) of n terminals; or the first request message carries the UE IDs and PLMN IDs of n terminals, where n is a positive integer greater than 1.

In this embodiment of this application, before performing ranging/sidelink positioning on the at least two terminals included in the first positioning request, the first network element needs to obtain privacy data of each terminal, and determines, based on the privacy data corresponding to each terminal, whether the terminal allows positioning.

The following separately describes, for the first terminal and the second terminal, a process in which the first network element determines whether the ranging/sidelink positioning is allowed.

### 1. For the first terminal:

An example in which the first network element belongs to the first PLMN and the first terminal belongs to the second PLMN is used for description.

For the first terminal, a plurality of solutions in which the first network element determines whether the ranging/sidelink positioning is allowed are provided in this embodiment of this application.

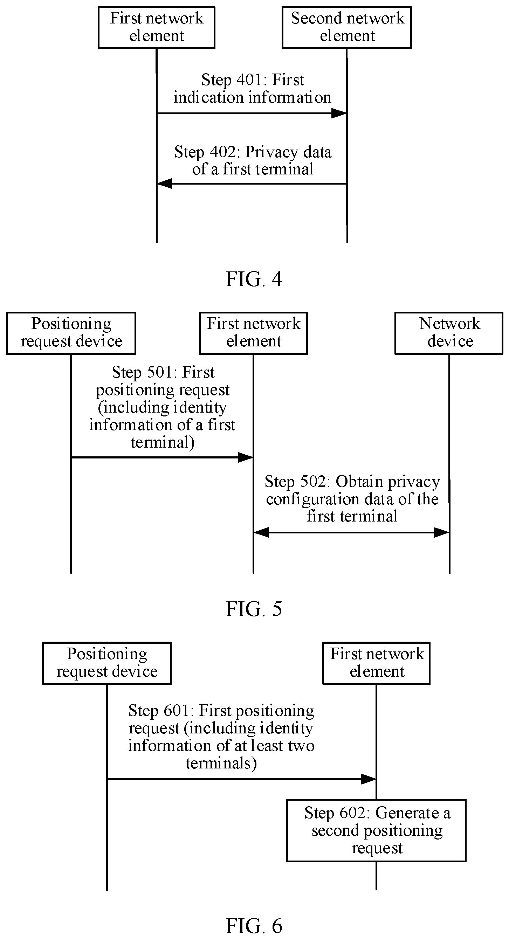

With reference to FIG. 4, the following describes a first solution, provided in this embodiment of this application, in which the first network element determines whether the first terminal is allowed to undergo ranging/sidelink positioning.

A schematic flowchart of a communication method shown in FIG. 4 may include the following steps.

Step 401: The first network element sends first indication information to the second network element.

It should be noted that, before sending the first indication information, the first network element receives the first positioning request sent by the positioning request device, and determines, based on the identity information of the first terminal in the first positioning request, that the first terminal belongs to the second PLMN. Because the first network element belongs to the first PLMN, when the first terminal belongs to the PLMN different from that of the first network element, the first network element cannot directly obtain privacy configuration data of the first terminal. In this case, the first network element may obtain the privacy data of the first terminal via the second network element in the second PLMN.

Optionally, the second network element may be a GMLC network element in the second PLMN.

The first indication information indicates to obtain the privacy data of the first terminal. Optionally, the first indication information sent by the first network element to the second network element includes the identity information of the first terminal.

Step 402: The second network element sends the privacy data of the first terminal to the first network element.

After receiving the privacy data of the first terminal, the first network element determines, based on the privacy data of the first terminal, whether the first terminal is allowed to undergo ranging/sidelink positioning.

In response to the first indication information, the second network element obtains the privacy configuration data of the first terminal from a UDM network element in the second PLMN. For example, the second network element sends a data request to the UDM network element in the second PLMN, to obtain the privacy configuration data of the first terminal. The data request includes the identity information of the first terminal.

The second network element determines, based on the obtained privacy configuration data of the first terminal, the privacy data that is of the first terminal and that is sent to the first network element.

Optionally, the second network element may use the privacy configuration data of the first terminal as the privacy data; or the second network element may perform positioning notification or verification on the first terminal based on the privacy configuration data of the first terminal, to obtain a privacy check result, and use the privacy check result as the privacy data.

In addition, the first network element may further obtain, via the second network element, identity information of an AMF network element that serves the first terminal.

Optionally, the first network element sends second indication information to the second network element, where the second indication information indicates to obtain the identity information of the AMF network element that serves the first terminal; and in response to the second indication information, the second network element may obtain the AMF network element serving the first terminal from the UDM network element in the second PLMN, and send, to the first network element, the identity information of the AMF network element that serves the first terminal.

The following separately describes different privacy data.

Case 1: The privacy data of the first terminal is the privacy configuration data.

In this embodiment of this application, there may be a plurality of different configuration manners for the privacy configuration data of the terminal.

Configuration manner 1: The privacy configuration data may include positioning allowed or positioning not allowed.

Configuration manner 2: The privacy configuration data includes any one of the following:
1. Positioning not allowed.
2. Positioning allowed without user notification.
3. Positioning allowed with user notification.
4. Positioning requires user notification and verification, and positioning is allowed only if user authorization is granted or there is no user response.
5. Positioning requires user notification and verification, and positioning is allowed only if user authorization is granted.

It should be noted that the foregoing fourth type of privacy configuration data means that the terminal is allowed to be positioned when it is determined that user authorization is granted, or after a user verification message is sent to the terminal, if no response message from the terminal is received within specific duration, the terminal is allowed to be positioned. The foregoing fifth type of privacy configuration data means that positioning is allowed only when there is a user response (when the user verifies that positioning is allowed).

In Case 1, in response to the first indication information, the second network element sends the privacy configuration data of the first terminal to the first network element.

The first network element determines, based on the privacy configuration data of the first terminal, whether the first terminal is allowed to undergo ranging/sidelink positioning.

Determining manner 1: If the privacy configuration data of the first terminal indicates that positioning is allowed, the first network element determines that the first terminal is allowed to undergo ranging/sidelink positioning; or if the privacy configuration data of the first terminal indicates that positioning is not allowed, the first network element determines that the first terminal is not allowed to undergo ranging/sidelink positioning.

In this embodiment of this application, if the privacy configuration data uses Configuration manner 1, the first network element directly determines, based on the privacy configuration data of the first terminal when the privacy configuration data indicates that the positioning is allowed, that the first terminal is allowed to undergo ranging/sidelink positioning; or determines, when the privacy configuration data indicates that the positioning is not allowed, that the first terminal is not allowed to undergo ranging/sidelink positioning. Alternatively, if the privacy configuration data uses Configuration manner 2, and the privacy configuration data of the first terminal is the foregoing first type of privacy configuration data, it is determined that the privacy configuration data of the first terminal indicates that the positioning is not allowed; or if the privacy configuration data of the first terminal is the foregoing second, third, fourth, and fifth types of privacy configuration data, it is determined that the privacy configuration data of the first terminal indicates that the positioning is allowed.

Determining manner 2: If the privacy configuration data of the first terminal indicates that positioning is allowed without user notification, the first network element determines that the first terminal is allowed to undergo ranging/sidelink positioning; or if the privacy configuration data of the first terminal indicates that positioning is not allowed, a user needs to be notified, or the user needs to verify whether to allow the positioning, the first network element determines that the first terminal is not allowed to undergo ranging/sidelink positioning.

In this determining manner, the privacy configuration manner of the first terminal may use Configuration manner 2. When the privacy configuration data of the first terminal is the foregoing second type of privacy configuration data, the first network element determines that the first terminal is allowed to undergo ranging/sidelink positioning; or when the privacy configuration data of the first terminal is the foregoing first, third, fourth, and fifth types of privacy configuration data, the first network element determines that the first terminal is not allowed to undergo ranging/sidelink positioning.

It should be noted that, when the privacy configuration data (for example, the foregoing third, fourth, and fifth types of privacy configuration data) of the first terminal indicates that the user needs to be notified or the user needs to verify whether to allow the positioning, one manner is to use Determining manner 2 in which it is directly determined, based on the privacy configuration data, that the first terminal is not allowed to undergo ranging/sidelink positioning, and another manner may be that the first network element performs positioning notification or verification on the first terminal, and determines, based on the privacy check result, whether the first terminal is allowed to undergo ranging/sidelink positioning.

Optionally, the first network element performs positioning notification or verification on the first terminal in the following manner:
The first network element sends first privacy check indication information for the first terminal to a third network element. The privacy check indication information may also be referred to as a privacy check related action indication or privacy check result data, which is an indication determined by the first network element based on the privacy configuration data; and is used by the third network element to perform positioning notification to the first terminal, or is used by the third network element to perform positioning notification and verification on the first terminal.

The third network element is an AMF network element, or the third network element is a GMLC network element in a roaming network of the first terminal.

When the third network element is the AMF network element, the AMF network element may be a serving AMF network element of the first terminal.

Optionally, after receiving the first privacy check indication information, the AMF network element skips positioning measurement. It should be noted that the first privacy check indication information may further indicate that positioning ranging/sidelink positioning does not need to be performed in a current positioning notification or verification process.

For example, the first privacy check indication information may be carried in a first notification message. The first notification message may be a Ngmlc_Location_PovideLocation_request message, and the message carries the first privacy check indication information and the identity information of the first terminal; or the first notification message may be a new service-oriented message, where the new service-oriented message is specially used for the positioning notification or verification, rather than for the positioning ranging/sidelink positioning.

For another example, the first privacy check indication information may be carried in a privacy notification service message. The privacy notification service message may be a Namf_Location_privacy_notification message, and the message carries the first privacy check indication information and the identity information of the first terminal.

If the third network element is the AMF network element, after receiving the first privacy check indication information, if determining that the first terminal is currently in an idle state, the AMF network element triggers a paging procedure, and establishes a network connection to the first terminal.

For example, if determining, based on the first privacy check indication information, that only the user notification is needed, the third network element sends a non-access stratum (non-access stratum, NAS) message to the first terminal, where the NAS message carries identity information of the positioning request device that initiates the first positioning request; or if the third network element determines, based on the first privacy check indication information, that the user needs to perform verification, a NAS message sent by the third network element to the first terminal carries identity information of the positioning request device and indication information indicating that the user needs to perform verification.

The third network element receives a first response message returned by the first terminal, where the first response message may carry a result of the positioning notification or verification. The result of the positioning notification or verification may indicate that the positioning is allowed or the positioning is not allowed. Optionally, the result of the positioning notification or verification may further carry an applicable time range. For example, the result of the positioning notification or verification indicates that the positioning is allowed, and applicable time period corresponding to positioning allowed is 8:00 to 9:00.

The third network element determines a privacy check result based on the result of the positioning notification or verification performed on the first terminal; and sends the privacy check result to the first network element, where the privacy check result is the result of the positioning notification or verification performed on the first terminal. The first network element determines, based on the privacy check result, whether the first terminal is allowed to undergo ranging/sidelink positioning.

For example, when the privacy check result indicates that the positioning is allowed, the first network element determines that the first terminal is allowed to undergo ranging/sidelink positioning; or when the privacy check result indicates that the positioning is not allowed, the first network element determines that the first terminal is not allowed to undergo ranging/sidelink positioning.

Case 2: The privacy data of the first terminal is the privacy check result for the first terminal.

The privacy check result is a result of positioning notification or verification performed on the first terminal.

Case 2 may be applicable to a case: After obtaining the privacy configuration data of the first terminal from the UDM network element in the second PLMN, the second network element determines that the privacy configuration data (for example, the foregoing third, fourth, and fifth types of privacy configuration data) of the first terminal indicates that a user needs to be notified, or the user needs to verify whether to allow the positioning; and the first terminal privacy data obtained by the first network element via the second network element may be a privacy check result for the first terminal.

When determining that the privacy configuration data of the first terminal indicates that the user needs to be notified or the user needs to verify whether to allow the positioning, the second network element performs positioning notification or verification on the first terminal.

The second network element sends second privacy check indication information for the first terminal to a third network element. The privacy check indication information may also be referred to as a privacy check related action indication or privacy check result data, which is an indication determined by the second network element based on the privacy configuration data; and is used by the third network element to perform positioning notification to the first terminal, or is used by the third network element to perform positioning notification and verification on the first terminal.

The third network element is an AMF network element in the second PLMN, or the third network element is a GMLC network element in a roaming network of the first terminal.

When the third network element is the AMF network element, the AMF network element may be a serving AMF network element of the first terminal.

Optionally, after receiving the second privacy check indication information, the AMF network element skips positioning measurement. It should be noted that the second privacy check indication information may further indicate that positioning ranging/sidelink positioning does not need to be performed in a current positioning notification or verification process.

For example, the second privacy check indication information may be carried in a second notification message. The second notification message may be a Ngmlc_Location_ProvideLocation_request message, and the message carries the second privacy check indication information and the identity information of the first terminal; or the second notification message may be a new service-oriented message, where the new service-oriented message is specially used for the positioning notification or verification, rather than for the positioning ranging/sidelink positioning.

For another example, the second privacy check indication information may be carried in a privacy notification service message. The privacy notification service message may be a Namf_Location_privacy_notification message, and the message carries the second privacy check indication information and the identity information of the first terminal.

If the third network element is the AMF network element, after receiving the second privacy check indication information, if determining that the first terminal is currently in an idle state, the AMF network element triggers a paging procedure, and establishes a network connection to the first terminal.

For example, if determining, based on the second privacy check indication information, that only the user notification is needed, the third network element sends a NAS message to the first terminal, where the NAS message carries identity information of the positioning request device that initiates the first positioning request; or if the third network element determines, based on the second privacy check indication information, that the user needs to perform verification, a NAS message sent by the third network element to the first terminal carries identity information of the positioning request device and indication information indicating that the user needs to perform verification.

The third network element receives a second response message returned by the first terminal, where the second response message may carry a result of the positioning notification or verification. The result of the positioning notification or verification may indicate that the positioning is allowed or the positioning is not allowed. Optionally, the result of the positioning notification or verification may further carry an applicable time range.

The third network element determines a privacy check result based on the result of the positioning notification or verification performed on the first terminal; and sends the privacy check result to the first network element, where the privacy check result is the result of the positioning notification or verification performed on the first terminal. The first network element determines, based on the privacy check result, whether the first terminal is allowed to undergo ranging/sidelink positioning.

For example, when the privacy check result indicates that the positioning is allowed, the first network element determines that the first terminal is allowed to undergo ranging/sidelink positioning; or when the privacy check result indicates that the positioning is not allowed, the first network element determines that the first terminal is not allowed to undergo ranging/sidelink positioning.

With reference to FIG. 5, the following describes a second solution, provided in this embodiment of this application, in which the first network element determines whether the first terminal is allowed to undergo ranging/sidelink positioning.

A schematic flowchart of a communication method shown in FIG. 5 may include the following steps.

Step 501: A positioning request device sends a first positioning request. Correspondingly, the first network element receives the first positioning request.

The first positioning request may be the positioning request initiated by the positioning request device described above.

Step 502: The first network element obtains privacy configuration data of the first terminal from a network device.

The privacy configuration data is used to determine whether the first terminal is allowed to undergo ranging/sidelink positioning.

For example, the first network element sends a data request to the network device. In response to the data request, the network device sends the privacy configuration data of the first terminal to the first network element.

In this solution, the first network element determines that the first terminal belongs to the second PLMN, or the first network element cannot determine a PLMN to which the first terminal belongs.

Optionally, the network device is a preconfigured UDM network element or server. For example, the network device may be a UDM network element in the first PLMN.

Alternatively, in a possible implementation, if the first positioning request includes identity information of at least two terminals, the first network element does not need to determine a home PLMN of each terminal, and directly obtains privacy configuration data of each terminal from a UDM network element in the first PLMN of the first network element.

In this embodiment of this application, if the first network element does not obtain the privacy configuration data of the first terminal, the first network element may determine that the first terminal is not allowed to undergo ranging/sidelink positioning.

Correspondingly, if the privacy configuration data of the first terminal is obtained, the first network element determines, based on the privacy configuration data of the first terminal, whether the first terminal is allowed to undergo ranging/sidelink positioning.

It should be noted that, in this solution, for a manner in which the first network element determines, based on the privacy configuration data of the first terminal, whether the first terminal is allowed to undergo ranging/sidelink positioning, refer to the manner described in the foregoing first solution. The manner includes but is not limited to: The first network element directly determines, based on the privacy configuration data, whether the first terminal is allowed to undergo ranging/sidelink positioning, and the first network element determines, based on a privacy check result, whether the first terminal is allowed to undergo ranging/sidelink positioning.

### 2. For the second terminal:

An example in which the first network element and the second terminal belong to the first PLMN is used for description.

Because the first network element belongs to the PLMN the same as that of the second terminal, the first network element may obtain privacy configuration data of the second terminal from the UDM network element in the first PLMN.

For a manner of configuring the privacy configuration data of the second terminal, refer to the foregoing descriptions of the manner of configuring the privacy configuration data of the terminal.

In a possible implementation, the first network element determines, based on the privacy configuration data of the second terminal, whether the second terminal is allowed to undergo ranging/sidelink positioning.

Determining manner 1: If the privacy configuration data of the second terminal indicates that positioning is allowed, the first network element determines that the second terminal is allowed to undergo ranging/sidelink positioning; or if the privacy configuration data of the second terminal indicates that positioning is not allowed, the first network element determines that the second terminal is not allowed to undergo ranging/sidelink positioning.

In this embodiment of this application, if the privacy configuration data uses Configuration manner 1, the first network element directly determines, based on the privacy configuration data of the second terminal when the privacy configuration data indicates that the positioning is allowed, that the second terminal is allowed to undergo ranging/sidelink positioning; or determines, when the privacy configuration data indicates that the positioning is not allowed, that the second terminal is not allowed to undergo ranging/sidelink positioning. Alternatively, if the privacy configuration data uses Configuration manner 2, and the privacy configuration data of the second terminal is the foregoing first type of privacy configuration data, it is determined that the privacy configuration data of the second terminal indicates that the positioning is not allowed; or if the privacy configuration data of the second terminal is the foregoing second, third, fourth, and fifth types of privacy configuration data, it is determined that the privacy configuration data of the second terminal indicates that the positioning is allowed.

Determining manner 2: If the privacy configuration data of the second terminal indicates that positioning is allowed without user notification, the first network element determines that the second terminal is allowed to undergo ranging/sidelink positioning; or if the privacy configuration data of the second terminal indicates that positioning is not allowed, a user needs to be notified, or the user needs to verify whether to allow the positioning, the first network element determines that the second terminal is not allowed to undergo ranging/sidelink positioning.

In this determining manner, the privacy configuration manner of the second terminal may use Configuration manner 2. When the privacy configuration data of the second terminal is the foregoing second type of privacy configuration data, the first network element determines that the second terminal is allowed to undergo ranging/sidelink positioning; or when the privacy configuration data of the second terminal is the foregoing first, third, fourth, and fifth types of privacy configuration data, the first network element determines that the second terminal is not allowed to undergo ranging/sidelink positioning.

It should be noted that, when the privacy configuration data (for example, the foregoing third, fourth, and fifth types of privacy configuration data) of the second terminal indicates that the user needs to be notified or the user needs to verify whether to allow the positioning, one manner is to use Determining manner 2 in which it is directly determined, based on the privacy configuration data, that the second terminal is not allowed to undergo ranging/sidelink positioning, and another manner may be that the first network element performs positioning notification or verification on the second terminal, and determines, based on the privacy check result, whether the second terminal is allowed to undergo ranging/sidelink positioning.

Optionally, the first network element performs positioning notification or verification on the second terminal in the following manner:
The first network element sends third privacy check indication information for the second terminal to a fourth network element. The privacy check indication information may also be referred to as a privacy check related action indication or privacy check result data, which is an indication determined by the first network element based on the privacy configuration data; and is used by the fourth network element to perform positioning notification to the second terminal, or is used by the fourth network element to perform positioning notification and verification on the second terminal.

The fourth network element is an AMF network element, or the fourth network element is a GMLC network element in a roaming network of the second terminal.

When the fourth network element is the AMF network element, the AMF network element may be a serving AMF network element of the second terminal.

Optionally, after receiving the third privacy check indication information, the AMF network element skips positioning measurement. It should be noted that the third privacy check indication information further indicates that positioning ranging/sidelink positioning does not need to be performed in a current positioning notification or verification process.

For example, the third privacy check indication information may be carried in a third notification message. The third notification message may be a Ngmlc_Location_ProvideLocation_request message, and the message carries the third privacy check indication information and the identity information of the second terminal; or the third notification message may be a new service-oriented message, where the new service-oriented message is specially used for the positioning notification or verification, rather than for the positioning ranging/sidelink positioning.

For another example, the third privacy check indication information may be carried in a privacy notification service message. The privacy notification service message may be a Namf_Location_privacy_notification message, and the message carries the third privacy check indication information and the identity information of the second terminal.

If the fourth network element is the AMF network element, after receiving the third privacy check indication information, if determining that the second terminal is currently in an idle state, the AMF network element triggers a paging procedure, and establishes a network connection to the second terminal.

For example, if determining, based on the third privacy check indication information, that only the user notification is needed, the fourth network element sends a NAS message to the second terminal, where the NAS message carries identity information of the positioning request device that initiates the first positioning request; or if the fourth network element determines, based on the third privacy check indication information, that the user needs to perform verification, a NAS message sent by the fourth network element to the second terminal carries identity information of the positioning request device and indication information indicating that the user needs to perform verification.

The fourth network element receives a third response message returned by the second terminal, where the third response message may carry a result of the positioning notification or verification. The result of the positioning notification or verification may indicate that the positioning is allowed or the positioning is not allowed. Optionally, the result of the positioning notification or verification may further carry an applicable time range.

The fourth network element determines a privacy check result based on the result of the positioning notification or verification performed on the second terminal; and sends the privacy check result to the first network element, where the privacy check result is the result of the positioning notification or verification performed on the second terminal. The first network element determines, based on the privacy check result, whether the second terminal is allowed to undergo ranging/sidelink positioning.

For example, when the privacy check result indicates that the positioning is allowed, the first network element determines that the second terminal is allowed to undergo ranging/sidelink positioning; or when the privacy check result indicates that the positioning is not allowed, the first network element determines that the second terminal is not allowed to undergo ranging/sidelink positioning.

### Embodiment 2

In Embodiment 2, a solution for performing ranging/sidelink positioning on a plurality of terminals is provided. In this solution, for ranging/sidelink positioning service authorization from an AF or a 5G core network (5G core network, 5GC) NF, if all terminals do not allow the ranging/sidelink positioning, a GMLC is to reject a ranging/sidelink location service request from the AF/5GC NF. If only some terminals are not allowed to be positioned, when a GMLC invokes a positioning (Namf_Location_ProvidePositioningInfo) service operation towards an AMF, the GMLC is to delete identities of these terminals that are not allowed to be positioned.

### Ranging/Sidelink positioning solution 1:

FIG. 6 is a schematic flowchart of a communication method according to an embodiment of this application. The communication method may include the following steps.

Step 601: A positioning request device sends a first positioning request. Correspondingly, the first network element receives the first positioning request.

The first positioning request includes identity information of at least two terminals; and the first positioning request is for requesting ranging/sidelink positioning results of the at least two terminals.

Step 602: The first network element generates a second positioning request.

Optionally, the first network element generates the second positioning request based on a terminal in the at least two terminals that is allowed to undergo ranging/sidelink positioning and a terminal in the at least two terminals that is not allowed to undergo ranging/sidelink positioning.

After receiving the first positioning request, the first network element determines whether the at least two terminals that request to be positioned in the first positioning request are allowed to undergo ranging/sidelink positioning. For a manner in which the first network element determines whether the at least two terminals that request to be positioned in the first positioning request are allowed to undergo ranging/sidelink positioning, refer to the manner provided in Embodiment 1. Alternatively, the first network element may determine, in another manner, whether the at least two terminals that request to be positioned in the first positioning request are allowed to undergo ranging/sidelink positioning.

After determining that the terminal is allowed to be positioned and the terminal is not allowed to be positioned in the at least two terminals, the first network element generates the second positioning request to be sent to the AMF network element. When generating the second positioning request, the first network element may include, in the second positioning request, identity information of the terminal in the at least two terminals that is allowed to be positioned.

Optionally, the first network element includes, in the second positioning request, only the identity information of the terminal in the at least two terminals that is allowed to be positioned, and the second positioning request does not include identity information of the terminal in the at least two terminals that is not allowed to be positioned. For example, the first positioning request includes identity information of a UE 1, a UE 2, and a UE 3. If the UE 1 and the UE 2 are terminals that are allowed to be positioned, and the UE 3 is a terminal that is not allowed to be positioned, the first network element includes the identity information of the UE 1 and the UE 2 in the second positioning request, in other words, the second positioning request includes the identity information of the UE 1 and the UE 2, but does not include the identity information of the UE 3.

Alternatively, after generating the second positioning request including identity information of at least two terminals, the first network element removes, from the second positioning request, identity information of a terminal in the at least two terminals that is not allowed to be positioned. For example, the first positioning request includes identity information of a UE 1, a UE 2, and a UE 3. If the UE 1 and the UE 2 are terminals that are allowed to be positioned, and the UE 3 is a terminal that is not allowed to be positioned, the first network element first generates the second positioning request including the identity information of the UE 1, the UE 2, and the UE 3, and then removes the identity information of the UE 3 from the second positioning request, to obtain the second positioning request including the identity information of the UE 1 and the UE 2.

In a possible implementation, the first network element sends the second positioning request to the AMF network element.

Optionally, the AMF network element is a serving AMF network element of a terminal that requests to be positioned in the second positioning request.

For example, if the UE 1 and the UE 2 are terminals that are allowed to be positioned, the first network element sends the second positioning request to a serving AMF network element of the UE 1, and sends the second positioning request to a serving AMF network element of the UE 2.

In response to the second positioning request, the AMF network element performs ranging/sidelink positioning on the terminal included in the second positioning request, to obtain a ranging/sidelink positioning result of the terminal.

The AMF network element sends the obtained ranging/sidelink positioning result of the terminal to the first network element.

The first network element sends a positioning response message to the positioning request device, where the positioning response message includes a ranging/sidelink positioning result of the terminal in the at least two terminals that is allowed to undergo ranging/sidelink positioning, and a positioning failure cause parameter of the terminal in the at least two terminals that is not allowed to undergo ranging/sidelink positioning.

Optionally, the positioning failure cause parameter may be a character indicating that the terminal is not allowed to undergo ranging/sidelink positioning, or indicating that the terminal cannot establish a connection to a core network. For example, the positioning failure cause parameter may be a value. The value may be a pre-agreed value indicating that the terminal is not allowed to undergo ranging/sidelink positioning, or indicating that the terminal cannot establish the connection to the core network. For example, the positioning failure cause parameter is a value between 1 and 100. Alternatively, the positioning failure cause parameter may alternatively be a letter or a symbol. A specific form of the positioning failure cause parameter is not limited in embodiments of this application.

For example, the positioning response message includes ranging/sidelink positioning results of the UE 1 and the UE 2, and a positioning failure cause parameter of the UE 3 (for example, the positioning failure cause parameter may be description information indicating that the UE 3 is not allowed to be positioned).

### Ranging/Sidelink positioning solution 2:

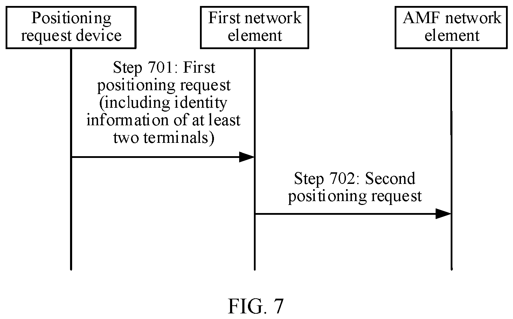

FIG. 7 is a schematic flowchart of a communication method according to an embodiment of this application. The communication method may include the following steps.

Step 701: A positioning request device sends a first positioning request. Correspondingly, the first network element receives the first positioning request.

The first positioning request includes identity information of at least two terminals; and the first positioning request is for requesting ranging/sidelink positioning results of the at least two terminals.

Step 702: The first network element sends a second positioning request to the AMF network element.

The second positioning request includes the identity information of the at least two terminals, and the second positioning request is for requesting ranging/sidelink positioning results of the at least two terminals.

It should be noted that the first positioning request and the second positioning request may include same content. For example, the first positioning request includes identity information of a UE 1, a UE 2, and a UE 3, and the second positioning request also includes the identity information of the UE 1, the UE 2, and the UE 3.

After receiving the first positioning request, the first network element determines whether the at least two terminals that request to be positioned in the first positioning request are allowed to undergo ranging/sidelink positioning. For a manner in which the first network element determines whether the at least two terminals that request to be positioned in the first positioning request are allowed to undergo ranging/sidelink positioning, refer to the manner provided in Embodiment 1. Alternatively, the first network element may determine, in another manner, whether the at least two terminals that request to be positioned in the first positioning request are allowed to undergo ranging/sidelink positioning.

After receiving the second positioning request, the AMF network element performs ranging/sidelink positioning on each terminal included in the second positioning request, to obtain a ranging/sidelink positioning result of the terminal. For example, if the second positioning request includes the identity information of the UE 1, the UE 2, and the UE 3, the AMF network element performs ranging/sidelink positioning on the UE 1, the UE 2, and the UE 3, to obtain ranging/sidelink positioning results of the UE 1, the UE 2, and the UE 3.

The AMF network element sends the obtained ranging/sidelink positioning result of each terminal to the first network element.

The first network element sends a positioning response message to the positioning request device, where the positioning response message includes a ranging/sidelink positioning result of the terminal in the at least two terminals that is allowed to undergo ranging/sidelink positioning, and a positioning failure cause parameter of the terminal in the at least two terminals that is not allowed to undergo ranging/sidelink positioning.

For example, after the first network element receives the ranging/sidelink positioning results of the UE 1, the UE 2, and the UE 3 that are sent by the AMF network element, if the UE 1 and the UE 2 are terminals that are allowed to be positioned, and the UE 3 is a terminal that is not allowed to be positioned, the positioning response message includes the ranging/sidelink positioning results of the UE 1 and the UE 2, and a positioning failure cause parameter of the UE 3 (for example, the positioning failure cause parameter may be description information indicating that the UE 3 is not allowed to be positioned).

It should be noted that both Embodiment 1 and Embodiment 2 of this application may be independently implemented. When Embodiment 1 is independently performed, whether the terminal that the positioning request device requests to position is allowed to undergo ranging/sidelink positioning may be determined according to the solution provided in Embodiment 1. When Embodiment 2 is independently performed, according to the solution provided in Embodiment 2, ranging/sidelink positioning may be performed on the terminal that the positioning request device requests to position. In addition, Embodiment 1 and Embodiment 2 of this application may be further combined. When Embodiment 1 and Embodiment 2 are implemented in combination, after the first network element receives the first positioning request sent by the positioning request device, the first network element determines, according to the solution provided in Embodiment 1, whether the terminal that the positioning request device requests to position is allowed to undergo ranging/sidelink positioning, performs, according to the solution provided in Embodiment 2, ranging/sidelink positioning on the terminal that the positioning request device requests to position, and then reports, to the positioning request device, the ranging/sidelink positioning result of the terminal that is allowed to be positioned.

The following uses several examples to describe a solution obtained by combining Embodiment 1 and Embodiment 2 of this application.

### Example 1:

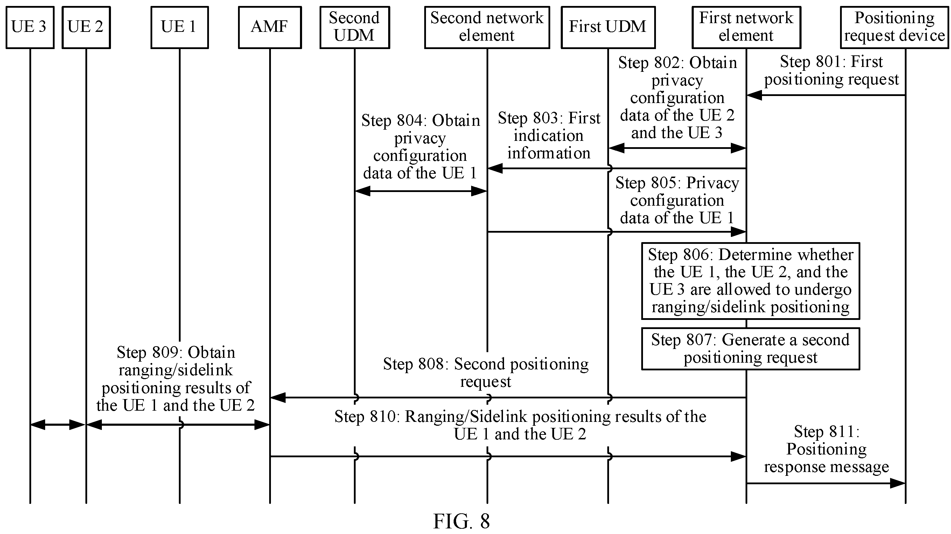

FIG. 8 is a schematic flowchart of a communication method according to an embodiment of this application. The communication method may include the following steps.

Step 801: A positioning request device sends a first positioning request to a first network element. Correspondingly, the first network element receives the first positioning request.

The first positioning request includes identity information of at least two terminals.

In Example 1, an example in which the first positioning request includes identity information of a UE 1, a UE 2, and a UE 3 is used for description. It is assumed that the UE 2, the UE 3, and the first network element belong to a first PLMN, and the UE 1 belongs to a second PLMN. For example, the UE 1 is a reference UE, and the UE 2 and the UE 3 are target UEs. Ranging may be performed on the target UEs based on a location of the reference UE, which may be understood as that the location of the reference UE is known, and distances between the target UEs and the reference UE are measured.

It should be noted that, that the first positioning request includes the identity information of the UE 1, the UE 2, and the UE 3 is an example of the first positioning request. The first positioning request may include the identity information of the at least two terminals. A specific quantity of pieces of the identity information of the terminals included in the first positioning request is not limited in embodiments of this application. For example, the first positioning request may include identity information of two terminals (for example, include the identity information of the UE 1 and the UE 2, or the identity information of the UE 1 and the UE 3). Alternatively, the first positioning request may include identity information of four terminals.

Step 801 corresponds to step 301. For a specific implementation of step 801, refer to the foregoing descriptions of step 301.

Optionally, the first network element may be a GMLC network element in the first PLMN.

Step 802: The first network element sends a data request to a first UDM, and obtains privacy configuration data of the UE 2 and the UE 3 from the first UDM. The data request includes the identity information of the UE 2 and the UE 3.

The first UDM and the first network element belong to the first PLMN.

Optionally, based on step 802, the first network element may further obtain addresses of serving AMF network elements of the UE 2 and the UE 3 from the first UDM.

For a specific implementation of step 802, refer to the foregoing descriptions of obtaining the privacy configuration data of the second terminal by the first network element.

Step 803: The first network element sends first indication information to a second network element, where the first indication information indicates to obtain privacy data of the UE 1.

The second network element belongs to the second PLMN. Optionally, the second network element may be a GMLC network element in the second PLMN.

Step 803 corresponds to step 401. For a specific implementation of step 803, refer to the foregoing descriptions of step 401.

Step 804: The second network element sends a data request to a second UDM, and obtains privacy configuration data of the UE 1 from the second UDM. The data request includes the identity information of the UE 1.

Optionally, based on step 804, the second network element may further obtain an address of a serving AMF network element of the UE 1 from the second UDM.

Step 805: The second network element sends the privacy configuration data of the UE 1 to the first network element.

Optionally, the second network element may include the privacy configuration data of the UE 1 in a response message. For example, the response message may be a new service-oriented response message like Ngmlc_location_UEdata_esponse, or may be an existing Ngmic_Location_ProvideLocation_response message that carries the newly added privacy configuration data of the UE 1.

The second UDM and the second network element belong to the second PLMN.

Step 804 and step 805 correspond to the foregoing step 402. For a specific implementation of step 804 and step 805, refer to the foregoing descriptions of step 402.

Step 806: The first network element determines, based on the privacy configuration data of the UE 1, the UE 2, and the UE 3, whether the UE 1, the UE 2, and the UE 3 are allowed to undergo ranging/sidelink positioning.

In an optional manner, if the privacy configuration data of the terminal indicates that positioning is allowed, the first network element determines that the terminal is allowed to undergo ranging/sidelink positioning; or if the privacy configuration data of the terminal indicates that positioning is not allowed, the first network element determines that the terminal is not allowed to undergo ranging/sidelink positioning.

Alternatively, in another optional manner, if the privacy configuration data of the terminal indicates that positioning is allowed, the first network element determines that the terminal is allowed to undergo ranging/sidelink positioning; or if the privacy configuration data of the terminal indicates that positioning is not allowed, a user needs to be notified, or the user needs to verify whether to allow the positioning, the first network element determines that the terminal is not allowed to undergo ranging/sidelink positioning.

For a specific implementation of step 806, refer to the foregoing descriptions of Determining manner 1 and Determining manner 2 in Case 1.

Step 807: The first network element generates a second positioning request.

Optionally, the first network element generates the second positioning request based on a terminal in the UE 1, the UE 2, and the UE 3 that is allowed to undergo ranging/sidelink positioning and a terminal in the UE 1, the UE 2, and the UE 3 that is not allowed to undergo ranging/sidelink positioning.

For example, the second positioning request may include identity information of the terminal that is allowed to undergo ranging/sidelink positioning, and does not include identity information of the terminal that is not allowed to undergo ranging/sidelink positioning.

Assuming that the UE 1 and the UE 2 are terminals that are allowed to be positioned, and the UE 3 is a terminal that is not allowed to be positioned, the second positioning request includes the identity information of the UE 1 and the UE 2, and does not include the identity information of the UE 3.

It should be noted that, for a case in which ranging is performed on the UE 1 and the UE 2, it is assumed that the UE 1 is a terminal that is allowed to be positioned, and the UE 2 is a terminal that is not allowed to be positioned. Because the ranging needs to be performed on the UE 1 and the UE 2, when the UE 2 is not allowed to be positioned, the second positioning request may alternatively not include the identity information of the UE 1 and the UE 2.

Step 807 corresponds to the foregoing step 602. For a specific implementation of step 807, refer to the foregoing descriptions of step 602.

Step 808: The first network element sends the second positioning request to the AMF network element.

Step 809: The AMF network element performs ranging/sidelink positioning on the UE 1 and the UE 2, and obtains ranging/sidelink positioning results of the UE 1 and the UE 2.

Step 810: The AMF network element sends the ranging/sidelink positioning results of the UE 1 and the UE 2 to the first network element.

For a specific implementation of step 808 to step 810, refer to the foregoing descriptions of performing, by the first network element, ranging/sidelink positioning on the terminal via the AMF network element in Ranging/Sidelink positioning solution 1.

It should be noted that, in a process of performing step 808 to step 810, the serving AMF network element of the UE 1 is different from that of the UE 2. Therefore, in a process of performing step 808, the first network element separately sends the second positioning request to the serving AMF network element of the UE 1 and the serving AMF network element of the UE 2. In a process of performing step 809, the serving AMF network element of the UE 1 performs ranging/sidelink positioning on the UE 1, and the serving AMF network element of the UE 2 performs ranging/sidelink positioning on the UE 2; and when the UE 1 is a positioning initiation terminal (to be specific, a distance and/or an angle of the UE 1 relative to the UE 2, a distance and/or an angle of the UE 1 relative to the UE 3, or an absolute location of the UE 1 needs to be determined), the serving AMF network element of the UE 2 sends the ranging/sidelink positioning result to the serving AMF network element of the UE 1. In a process of performing step 810, the serving AMF network element of the UE 1 may send the ranging/sidelink positioning results of the UE 1 and the UE 2 to the first network element.

Step 811: The first network element sends a positioning response message to the positioning request device.

The positioning response message includes the ranging/sidelink positioning results of the UE 1 and the UE 2, and a positioning failure cause parameter of the UE 3.

For a specific implementation of step 811, refer to the descriptions of the positioning response message in Ranging/Sidelink positioning solution 1.

### Example 2:

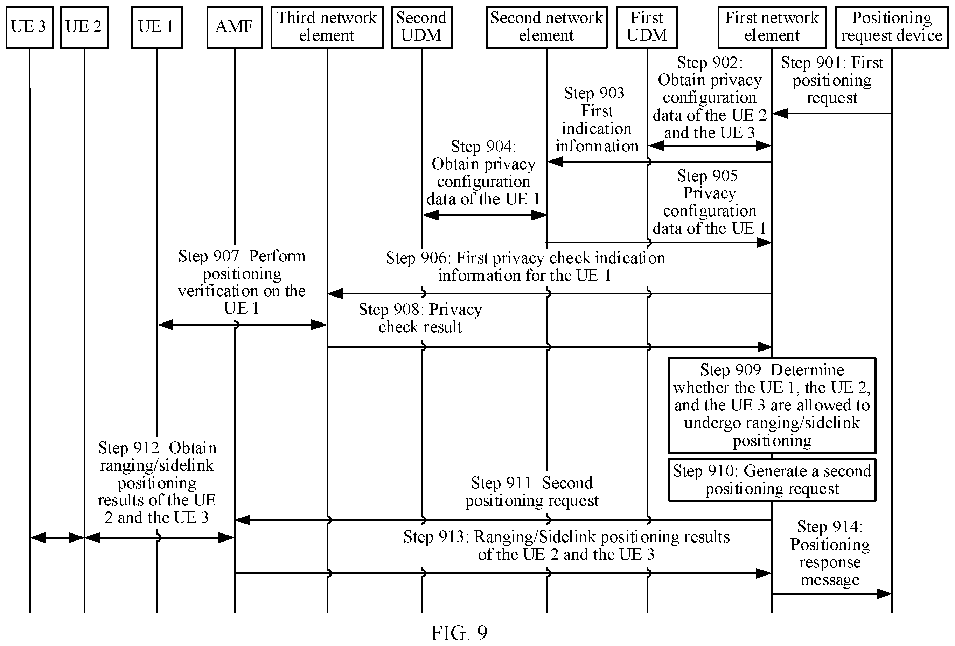

FIG. 9 is a schematic flowchart of a communication method according to an embodiment of this application. The communication method may include the following steps.

For step 901 to step 905, refer to the descriptions of step 801 to step 805 in FIG. 8.

The following uses an example in which privacy configuration data of a UE 2 and a UE 3 indicates that positioning is allowed, and privacy configuration data of a UE 1 indicates that a user needs to verify whether positioning is allowed.

Step 906: A first network element sends first privacy check indication information for the UE 1 to a third network element.

The third network element may be a serving AMF network element of the UE 1, or the third network element may be a GMLC network element (for example, a GMLC network element in a second PLMN) in a roaming network of the UE 1.

Optionally, when the third network element is an AMF network element, the first network element may send the first privacy check indication information to the third network element via a second network element.

For example, the first privacy check indication information may be carried in a GMLC location request (Ngmlc_Location_ProvideLocation_request) message, and the first privacy check indication information indicates that a current first positioning request is only used to perform positioning notification or verification on the terminal, and measurement and calculation related to ranging/sidelink positioning do not need to be performed. The AMF skips a positioning measurement and calculation procedure based on the first privacy check indication information. For example, an LMF is not selected, and measurement and calculation of a sidelink positioning/ranging service are not performed.

The first privacy check indication information may alternatively be implemented by using two pieces of indication information. One piece of indication information is a privacy check related action indication, and indicates to perform positioning notification or verification on the terminal; and the other piece of indication information indicates that a current first positioning request is only used to perform positioning notification or verification on the terminal, and measurement and calculation related to ranging/sidelink positioning do not need to be performed.

For example, the first privacy check indication information may be in a privacy notification service message sent by the first network element (for example, a GMLC network element). For example, the privacy notification service message is Namf_Location_privacy_notification, the privacy notification service message is used to perform positioning notification or verification on the terminal, and the privacy notification service message includes identity information of the terminal and the first privacy check indication information (where the privacy check indication information may also be referred to as a privacy check related action indication or privacy check result data). The AMF skips a positioning measurement and calculation procedure based on the privacy notification service message.

Step 907: The third network element performs positioning verification on the UE 1.

For example, if the privacy configuration data of the UE 1 indicates that the user needs to verify whether to allow the positioning, the third network element sends a query request to the UE 1, to query whether the user allows the positioning; and correspondingly, the UE 1 sends, to the third network element, a check result indicating whether the positioning is allowed.

Step 908: The third network element sends a privacy check result to the first network element.

The privacy check result is a result of the positioning verification performed on the UE 1. For example, if the privacy configuration data of the UE 1 indicates that the user needs to verify whether to allow the positioning, the UE 1 sends, to the third network element, the check result indicating whether the positioning is allowed. The privacy check result sent by the third network element to the first network element may indicate that the positioning is allowed or the positioning is not allowed.

Step 906 to step 908 correspond to content of performing positioning notification or verification by the first network element on the first terminal in Case 1 in the foregoing first solution in which the first network element determines whether the second terminal is allowed to undergo ranging/sidelink positioning.

Step 909: The first network element determines, based on the privacy configuration data of the UE 2 and the UE 3 and the privacy check result for the UE 1, whether the UE 1, the UE 2, and the UE 3 are allowed to undergo ranging/sidelink positioning.

Optionally, the first network element determines that the UE 2 and the UE 3 are allowed to be positioned, and the privacy check result for the UE 1 indicates that the positioning is not allowed.

Step 909 corresponds to content of determining, by the first network element, whether the terminal is allowed to undergo ranging/sidelink positioning in Case 1 in the foregoing first solution in which the first network element determines whether the second terminal is allowed to undergo ranging/sidelink positioning.

Step 910: The first network element generates a second positioning request.

Optionally, the first network element generates the second positioning request based on a terminal in the UE 1, the UE 2, and the UE 3 that is allowed to undergo ranging/sidelink positioning and a terminal in the UE 1, the UE 2, and the UE 3 that is not allowed to undergo ranging/sidelink positioning.

For example, the second positioning request may include identity information of the UE 2 and the UE 3.

Step 910 corresponds to the foregoing step 602. For a specific implementation of step 910, refer to the foregoing descriptions of step 602.

Step 911: The first network element sends the second positioning request to the AMF network element.

The AMF network element is serving AMF network elements of the UE 2 and the UE 3.

Step 912: The AMF network element performs ranging/sidelink positioning on the UE 2 and the UE 3, and obtains ranging/sidelink positioning results of the UE 2 and the UE 3.

Step 913: The AMF network element sends the ranging/sidelink positioning results of the UE 2 and the UE 3 to the first network element.

For a specific implementation of step 911 to step 913, refer to the foregoing descriptions of performing ranging/sidelink positioning by the AMF network element on the terminal.

For step 914, refer to the descriptions of step 814 in FIG. 8.

### Example 3:

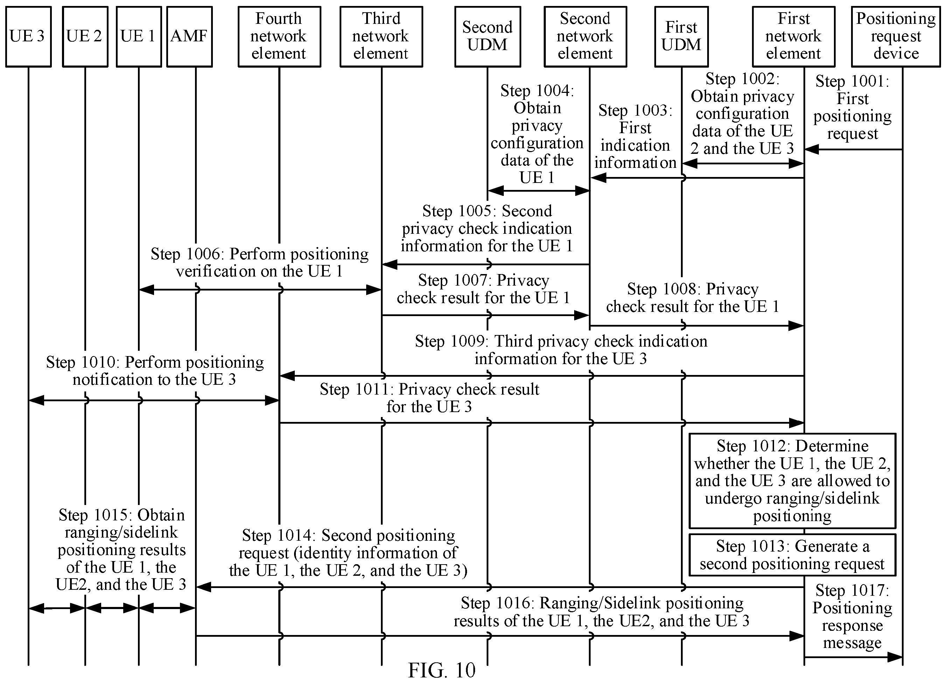

FIG. 10 is a schematic flowchart of a communication method according to an embodiment of this application. The communication method may include the following steps.

For step 1001 to step 1004, refer to the descriptions of step 801 to step 804 in FIG. 8.

The following uses an example in which privacy configuration data of a UE 2 indicates that positioning is allowed, privacy configuration data of a UE 3 indicates that positioning is allowed and a user needs to be notified, and privacy configuration data of a UE 1 indicates that a user needs to verify whether positioning is allowed.

Step 1005: A second network element sends second privacy check indication information for the UE 1 to a third network element.

The third network element may be a serving AMF network element of the UE 1.

For example, the second privacy check indication information may be carried in a GMLC location request (Ngmlc_Location_ProvideLocation_request) message, and the second privacy check indication information indicates that a current first positioning request is only used to perform positioning notification or verification on the terminal, and measurement and calculation related to ranging/sidelink positioning do not need to be performed. When the third network element is the AMF network element, the AMF network element skips a positioning measurement and calculation procedure based on the second privacy check indication information. For example, an LMF is not selected, and measurement and calculation of a sidelink positioning/ranging service are not performed.

The second privacy check indication information may alternatively be implemented by using two pieces of indication information. One piece of indication information is a privacy check related action indication, and indicates to perform positioning notification or verification on the terminal; and the other piece of indication information indicates that a current first positioning request is only used to perform positioning notification or verification on the terminal, and measurement and calculation related to ranging/sidelink positioning do not need to be performed.

For example, the second privacy check indication information may be in a privacy notification service message sent by the second network element (for example, a GMLC network element). For example, the privacy notification service message is Namf_Location_privacy_notification, the privacy notification service message is used to perform positioning notification or verification on the terminal, and the privacy notification service message includes identity information of the terminal and the second privacy check indication information (where the privacy check indication information may also be referred to as a privacy check related action indication or privacy check result data). The AMF skips a positioning measurement and calculation procedure based on the privacy notification service message.

Step 1006: The third network element performs positioning verification on the UE 1.

For example, if the privacy configuration data of the UE 1 indicates that the user needs to verify whether to allow the positioning, the third network element sends a query request to the UE 1, to query whether the user allows the positioning; and correspondingly, the UE 1 sends, to the third network element, a check result indicating whether the positioning is allowed.

Step 1007: The third network element sends a privacy check result for the UE 1 to the second network element.

The privacy check result is a result of the positioning verification performed on the UE 1. For example, if the privacy configuration data of the UE 1 indicates that the user needs to verify whether to allow the positioning, the UE 1 sends, to the third network element, the check result indicating whether the positioning is allowed. The privacy check result sent by the third network element to the first network element may indicate that the positioning is allowed or the positioning is not allowed.

Step 1008: The second network element sends the privacy check result for the UE 1 to the first network element.

Step 1005 to step 1008 correspond to content of performing positioning notification or verification by the second network element on the first terminal in Case 2 in the foregoing first solution in which the first network element determines whether the second terminal is allowed to undergo ranging/sidelink positioning.

Step 1009: The first network element sends third privacy check indication information for the UE 3 to a fourth network element.

The fourth network element may be a serving AMF network element of the UE 3; or when the UE 3 is roaming, the fourth network element is a GMLC in a roaming network of the UE 3.

Step 1010: The fourth network element performs positioning notification to the UE 3.

For example, if the privacy configuration data of the UE 3 indicates that the user needs to be notified, the fourth network element sends a positioning notification message to the UE 1, to notify the user of performing positioning.

Step 1011: The fourth network element sends a privacy check result for the UE 3 to the first network element.

Optionally, the privacy check result sent by the fourth network element to the first network element may indicate that the UE 3 verifies that the notification has been received.

It should be noted that step 1005 to step 1008 are a privacy check process performed by the second network element on the UE 1, and step 1009 to step 1011 are a privacy check process performed by the second network element on the UE 3. A sequence of performing step 1005 to step 1008 and step 1009 to step 1011 may not be limited.

Step 1009 to step 1011 correspond to the foregoing content of performing positioning notification or verification for the second terminal.

Step 1012: The first network element determines, based on the privacy configuration data of the UE 2 and the privacy check results for the UE 1 and the UE 3, whether the UE 1, the UE 2, and the UE 3 are allowed to undergo ranging/sidelink positioning.

Optionally, the first network element determines that the UE 2 and the UE 3 are allowed to be positioned, and the privacy check result for the UE 1 indicates that the positioning is not allowed.

Step 1012 corresponds to content of determining, by the first network element, whether the terminal is allowed to undergo ranging/sidelink positioning in Case 1 in the foregoing first solution in which the first network element determines whether the second terminal is allowed to undergo ranging/sidelink positioning.

Step 1013: The first network element generates a second positioning request.

For example, the second positioning request may include identity information of the UE 1, the UE 2, and the UE 3.

Step 1014: The first network element sends the second positioning request to the AMF network element.

Step 1015: The AMF network element performs ranging/sidelink positioning on the UE 1, the UE 2, and the UE 3, and obtains ranging/sidelink positioning results of the UE 1, the UE 2, and the UE 3.

Step 1016: The AMF network element sends the ranging/sidelink positioning results of the UE 1, the UE 2, and the UE 3 to the first network element.

It should be noted that, in a process of performing step 1014 to step 1016, the serving AMF network element of the UE 1 is different from those of the UE 2 and the UE 3. Therefore, in a process of performing step 1014, the first network element separately sends the second positioning request to the serving AMF network element of the UE 1, and the serving AMF network elements of the UE 2 and the UE 3. In a process of performing step 1015, the serving AMF network element of the UE 1 performs ranging/sidelink positioning on the UE 1, and the serving AMF network elements of the UE 2 and the UE 3 perform ranging/sidelink positioning on the UE 2 and the UE 3; and when the UE 2 is a positioning initiation terminal (to be specific, a distance and/or an angle of the UE 2 relative to the UE 1, a distance and/or an angle of the UE 2 relative to the UE 3, or an absolute location of the UE 2 needs to be determined), the serving AMF network element of the UE 1 sends the ranging/sidelink positioning result to the serving AMF network element of the UE 2. In a process of performing step 1016, the serving AMF network element of the UE 2 may send the ranging/sidelink positioning results of the UE 1, the UE 2, and the UE 3 to the first network element.

For a specific implementation of step 1013 to step 1016, refer to the foregoing descriptions of performing, by the first network element, ranging/sidelink positioning on the terminal via the AMF network element in Ranging/Sidelink positioning solution 2.

Step 1017: The first network element sends a positioning response message to the positioning request device.

Because the first network element determines that the UE 1 is not allowed to be positioned, the positioning response message may include the ranging/sidelink positioning results of the UE 2 and the UE 3, and a positioning failure cause parameter of the UE 1.

For a specific implementation of step 1017, refer to the descriptions of the positioning response message in Ranging/Sidelink positioning solution 2.

### Example 4:

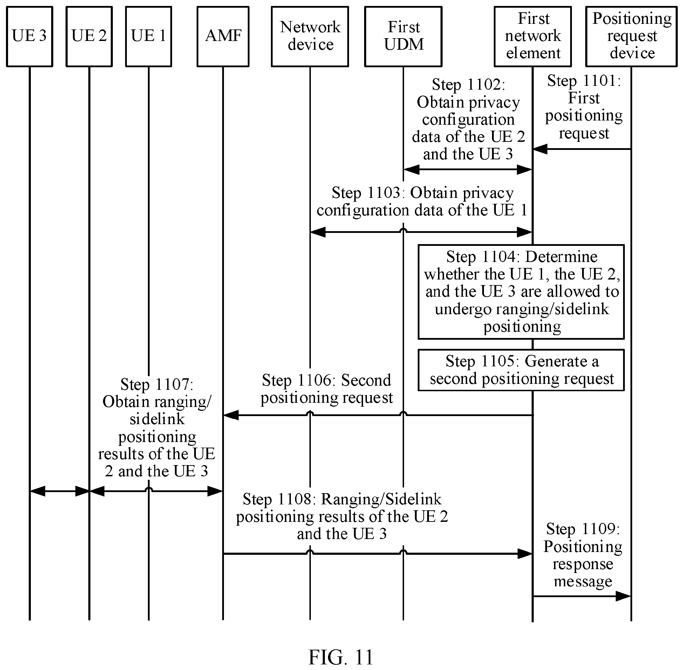

FIG. 11 is a schematic flowchart of a communication method according to an embodiment of this application. The communication method may include the following steps.

For step 1101 and step 1102, refer to the descriptions of step 801 and step 802 in the figure.

Step 1103: A first network element obtains privacy configuration data of a UE 1 from a network device.

Optionally, the network device is a preconfigured UDM network element or server. For example, the preconfigured UDM network element may be a first UDM network element.

Step 1103 corresponds to the foregoing step 502. For a specific implementation of step 1103, refer to the foregoing descriptions of step 502.

Step 1104: The first network element determines, based on privacy configuration data of the UE 1, a UE 2, and a UE 3, whether the UE 1, the UE 2, and the UE 3 are allowed to undergo ranging/sidelink positioning.

Assuming that the first network element does not obtain the privacy configuration data of the UE 1 from the network device, the first network element may determine that the UE 1 is not allowed to be positioned.

For a specific implementation of step 1104, refer to content of determining, by the first network element, whether the terminal is allowed to undergo ranging/sidelink positioning in the communication method procedure corresponding to FIG. 5.

The following uses an example in which the privacy configuration data of the UE 2 and the UE 3 indicates that positioning is allowed for description.

Step 1105: The first network element generates a second positioning request.

Optionally, the first network element generates the second positioning request based on a terminal in the UE 1, the UE 2, and the UE 3 that is allowed to undergo ranging/sidelink positioning and a terminal in the UE 1, the UE 2, and the UE 3 that is not allowed to undergo ranging/sidelink positioning.

For example, the second positioning request may include identity information of the UE 2 and the UE 3.

Step 1105 corresponds to the foregoing step 602. For a specific implementation of step 1105, refer to the foregoing descriptions of step 602.

Step 1106: The first network element sends the second positioning request to the AMF network element.

The AMF network element is serving AMF network elements of the UE 2 and the UE 3.

Step 1107: The AMF network element performs ranging/sidelink positioning on the UE 2 and the UE 3, and obtains ranging/sidelink positioning results of the UE 2 and the UE 3.

Step 1108: The AMF network element sends the ranging/sidelink positioning results of the UE 2 and the UE 3 to the first network element.

For a specific implementation of step 1106 to step 1108, refer to the foregoing descriptions of performing, by the first network element, ranging/sidelink positioning on the terminal via the AMF network element in Ranging/Sidelink positioning solution 1.

Step 1109: The first network element sends a positioning response message to the positioning request device.

The positioning response message includes the ranging/sidelink positioning results of the UE 2 and the UE 3, and a positioning failure cause parameter of the UE 1.

For a specific implementation of step 1109, refer to the descriptions of the positioning response message in Ranging/Sidelink positioning solution 1.

### Embodiment 3

In Embodiment 3, a solution for performing ranging/sidelink positioning on a plurality of terminals is provided. In this solution, when receiving a ranging/sidelink location service request from an AF or a 5GC NF, if determining, based on privacy configuration data of a terminal, that the terminal needs to notify a user or the user needs to verify whether to allow positioning, a GMLC interacts with an AMF to determine whether the terminal is allowed to undergo ranging/sidelink positioning.

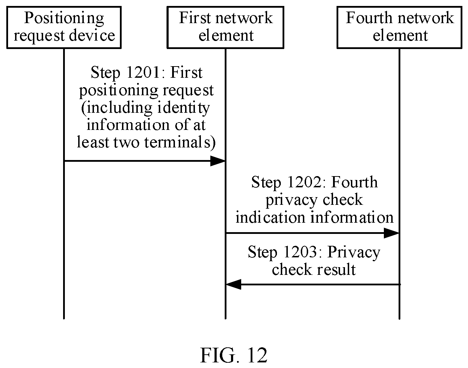

FIG. 12 is a schematic flowchart of a communication method according to an embodiment of this application. The communication method may include the following steps.

Step 1201: A first network element receives a first positioning request.

Optionally, the first network element may be a GMLC network element.

The first positioning request may be a positioning request initiated by a positioning request device. For example, the positioning request device may be one or more of a network element NF, an application server, or a positioning client in a core network.

Optionally, the first positioning request includes identity information of at least two terminals, and the first positioning request is for requesting ranging/sidelink positioning results of the at least two terminals.

For a type of the identity information of the terminal included in the first positioning request, refer to the foregoing descriptions. Details are not described herein again.

In this embodiment of this application, the at least two terminals that perform the positioning request in the first positioning request may include terminals belonging to a same PLMN, or the at least two terminals may include terminals belonging to different PLMNs. After receiving the first positioning request, the first network element may determine, based on the identity information of the at least two terminals included in the first positioning request or based on the PLMNs to which the at least two terminals belong and that are carried in the first positioning request, the PLMN to which each terminal belongs.

For example, the at least two terminals that perform the positioning request in the first positioning request may include a terminal that belongs to a PLMN the same as that of the first network element. For example, the first positioning request includes identity information of a UE 1, a UE 2, a UE 3, and a UE 4, and the UE 1, the UE 2, the UE 3, and the UE 4 all belong to a PLMN the same as that of the first network element.

For another example, the at least two terminals that perform the positioning request in the first positioning request may include a terminal that belongs to a PLMN different from that of the first network element. For example, the first positioning request includes identity information of a UE 1, a UE 2, a UE 3, and a UE 4, and the UE 1, the UE 2, the UE 3, and the UE 4 all belong to a PLMN different from that of the first network element.

The at least two terminals that perform the positioning request in the first positioning request may include a terminal that belongs to a PLMN the same as that of the first network element, and a terminal that belongs to a PLMN different from that of the first network element. For example, the first positioning request includes identity information of a UE 1, a UE 2, a UE 3, and a UE 4, the UE 1 and the UE 2 belong to a PLMN the same as that of the first network element, and the UE 3 and the UE 4 belong to a PLMN different from that of the first network element.

In the following descriptions, a terminal that is in the at least two terminals that perform the positioning request in the first positioning request and that belongs to a PLMN different from that of the first network element is referred to as a first terminal, and a terminal that is in the at least two terminals that perform the positioning request in the first positioning request and that belongs to a PLMN the same as that of the first network element is referred to as a second terminal.

After receiving the first positioning request, the first network element obtains privacy data of each terminal that performs the positioning request in the first positioning request.

Because the first terminal belongs to a PLMN different from that of the first network element, the first network element cannot directly obtain privacy configuration data of the first terminal from a UDM network element. Optionally, the first network element may obtain the privacy data of the first terminal via a second network element. For example, the second network element may be a GMLC network element that belongs to the PLMN the same as that of the first terminal. For the second terminal, if the second terminal belongs to the PLMN the same as that of the first network element, the first network element may directly obtain the privacy configuration data of the first terminal from a UDM network element. The following separately describes the first terminal and the second terminal.

### 1. For the first terminal

When the at least two terminals that perform the positioning request in the first positioning request include the first terminal (including a case in which a part of the at least two terminals are the first terminal, or all terminals are first terminals), the privacy data of the first terminal may be obtained via the following content, and positioning notification or verification may be performed on the first terminal based on the following content.

The first network element belongs to a first PLMN, and the first terminal belongs to a second PLMN. Because the first network element cannot directly obtain the privacy configuration data of the first terminal from the UDM network element in the first PLMN, optionally, the first network element may obtain privacy data of the first terminal via a second network element in the second PLMN.

For example, the second network element is a GMLC network element in the second PLMN.

Optionally, the step of obtaining, by the first network element, the privacy data of the first terminal includes the following steps.

Step a: The first network element sends first indication information to the second network element, where the first indication information indicates to obtain the privacy data of the first terminal.

Optionally, the first indication information sent by the first network element to the second network element includes identity information of the first terminal.

Step b: In response to the first indication information, the second network element obtains the privacy configuration data of the first terminal from a UDM network element in the second PLMN.

For example, the second network element sends a data request to the UDM network element in the second PLMN, to obtain the privacy configuration data of the first terminal; and the data request includes the identity information of the first terminal.

For example, the first indication information may be sent via a Ngmlc_Location_PrivacyCheck service message.

Step c: The second network element sends the privacy data of the first terminal to the first network element.

In step c, the second network element may send the privacy configuration data of the first terminal to the first network element; or the second network element may perform positioning notification or verification on the first terminal based on the privacy configuration data of the first terminal, to obtain a privacy check result, and the second network element may send the privacy check result for the first terminal to the first network element.

For a solution in which the second network element performs positioning notification or verification on the first terminal, when the privacy configuration data (for example, the foregoing third, fourth, and fifth types of privacy configuration data) of the first terminal indicates that user notification or verification for the positioning is required, the second network element initiates the positioning notification or verification on the first terminal.

Optionally, the second network element sends fifth privacy check indication information for the first terminal to a third network element, where the fifth privacy check indication information indicates to perform positioning notification or verification on the first terminal.

For example, the fifth privacy notification service message may be a Namf_Location_privacy_notification message.

The third network element may be a serving AMF of the first terminal, or the third network element may be a GMLC network element in a roaming network of the first terminal.

Optionally, when the third network element is an AMF network element, the AMF network element skips positioning measurement after receiving the fifth privacy check indication information. It should be noted that the fifth privacy check indication information may further indicate that positioning ranging/sidelink positioning does not need to be performed in a current positioning notification or verification process.

In this embodiment, after receiving the fifth privacy check indication, the third network element performs positioning notification or verification on the first terminal. For a process in which the third network element performs positioning notification or verification on the first terminal, refer to the process in which the third network element performs positioning notification or verification on the first terminal in Embodiment 1. Details are not described herein again.

The second network element obtains a privacy check result for the positioning notification or verification performed by the third network element on the first terminal, and the second network element sends the privacy check result for the first terminal to the first network element.

The first network element may determine, based on the privacy check result, whether the first terminal is allowed to undergo ranging/sidelink positioning.

### For the second terminal

When the at least two terminals that perform the positioning request in the first positioning request include the second terminal (including a case in which a part of the at least two terminals are the second terminal, or all terminals are second terminals), the privacy data of the second terminal may be obtained via the following content, and positioning notification or verification may be performed on the second terminal based on the following content.

The first network element belongs to the first PLMN, and the first terminal belongs to the second PLMN. Because the first network element and the second terminal belong to the same PLMN, the first network element may obtain privacy configuration data of the second terminal from the UDM network element in the first PLMN.

After obtaining the privacy configuration data of the second terminal, the first network element determines, as a candidate terminal based on the privacy configuration data of the second terminal, the second terminal whose privacy configuration data indicates that user notification or verification for the positioning is required.

For the candidate terminal, the first network element may perform the following step 1202 and step 1203.

Step 1202: The first network element sends fourth privacy check indication information for a candidate terminal in the at least two terminals to a fourth network element.

Optionally, the fourth privacy check indication information indicates to perform positioning notification or verification on the candidate terminal, where privacy configuration data of the candidate terminal indicates that user notification or verification for the positioning is required.

Based on the foregoing descriptions, after obtaining the privacy configuration data of the second terminal, the first network element may generate a candidate terminal set. A candidate terminal in the candidate terminal set may meet at least one of the following conditions:
Condition 1: The privacy configuration data of the candidate terminal indicates that user notification or verification for the positioning is required.
Condition 2: The first network element obtains identity information of a serving AMF network element of the candidate terminal. For example, the identity information of the AMF network element may be address information. When the candidate terminal meets Condition 2, it indicates that the candidate terminal is reachable for the first network element; and it may be understood that the first network element may exchange information with the serving AMF network element of the candidate terminal.

For each candidate terminal in the candidate terminal set, the first network element may send fourth privacy check indication information for the candidate terminal to the fourth network element.

The first network element may separately send, for each candidate terminal in the candidate terminal set, fourth privacy check indication information to a fourth network element corresponding to the candidate terminal.

Optionally, the first network element sends a privacy notification service message for the candidate terminal to the fourth network element, where the privacy notification service message includes identity information of the candidate terminal and the fourth privacy check indication information.

For example, the privacy notification service message may be a Namf_Location_privacy_notification message.

The fourth network element may be a serving AMF network element of the candidate terminal, or the fourth network element may be a GMLC network element in a roaming network of the candidate terminal.

Optionally, when the fourth network element is an AMF network element, the AMF network element skips positioning measurement after receiving the fourth privacy check indication information. It should be noted that the fourth privacy check indication information may further indicate that positioning ranging/sidelink positioning does not need to be performed in a current positioning notification or verification process.

Step 1203: The first network element receives a privacy check result from the fourth network element.

The privacy check result is a result of the positioning notification or verification performed on the candidate terminal.

In this embodiment, after receiving the fourth privacy check indication, the fourth network element performs positioning notification or verification on the candidate terminal. For a process in which the fourth network element performs positioning notification or verification on the candidate terminal, refer to the process in which the third network element performs positioning notification or verification on the first terminal in Embodiment 1. Details are not described herein again.

The first network element may determine, based on the privacy check result of the positioning notification or verification performed by the fourth network element on the candidate terminal, whether the candidate terminal is allowed to undergo ranging/sidelink positioning.

In addition, in this embodiment of this application, after receiving the first positioning request, the first network element may further determine a positioning initiation terminal from the at least two terminals that perform the positioning request in the first positioning request. The positioning initiation terminal is a terminal that performs an initiated ranging/sidelink positioning service.

The first network element may determine the positioning initiation terminal in the following plurality of manners.

Determining manner 1: The first network element determines the positioning initiation terminal depending on whether the terminal that requests the ranging/sidelink positioning in the first positioning request is allowed to undergo ranging/sidelink positioning.

Optionally, the first network element may determine, as a positioning initiation terminal, a terminal that is in the at least two terminals that request the ranging/sidelink positioning in the first positioning request, is allowed to undergo ranging/sidelink positioning, and obtains address information of a serving AMF network element.

For example, privacy configuration data of a terminal 1 indicates that positioning is allowed, privacy configuration data of a terminal 2 indicates that positioning needs to be notified to a user and verified by the user, and privacy configuration data of a terminal 3 indicates that positioning is not allowed. When determining that a privacy check result for the terminal 2 indicates that the positioning is allowed, the first network element may determine a positioning initiation terminal from the terminal 1 and the terminal 2. When determining that a privacy check result for the terminal 2 indicates that the positioning is not allowed, the first network element determines that the terminal 1 is a positioning initiation terminal.

Based on the foregoing manner, it can be ensured that a subsequent positioning procedure (a location service request sent by the first network element to the terminal) is not terminated due to a privacy issue of a single terminal (for example, a positioning initiation terminal), and it is ensured that a part of terminals that are allowed to be positioned perform a sidelink/ranging positioning service.

Determining manner 2: The first network element may determine, based on assistance information sent by the positioning request device, a positioning initiation terminal in the at least two terminals that requests the ranging/sidelink positioning in the first positioning request.

When the positioning initiation terminal is determined in Determining manner 2, and the first network element determines a candidate terminal set that needs to perform positioning notification or verification, the candidate terminal set does not include the positioning initiation terminal. It may be understood that, when the positioning initiation terminal is a second terminal that belongs to the PLMN the same as that of the first network element, and privacy configuration data of the positioning initiation terminal indicates that user notification or verification for the positioning is required, the candidate terminal set determined by the first network element does not include the positioning initiation terminal.

Based on this, when the privacy configuration data of the positioning initiation terminal indicates that the user needs to be notified or the user needs to verify whether to allow the positioning, in a process of performing ranging/sidelink positioning on the terminal, a second positioning request generated by the first network element may include sixth privacy check indication information for the positioning initiation terminal. The sixth privacy check indication information indicates to perform positioning notification or verification on the positioning initiation terminal.

Correspondingly, after receiving the second positioning request, an AMF network element may perform positioning notification or verification on the positioning initiation terminal, to determine whether the positioning initiation terminal is allowed to undergo ranging/sidelink positioning.

When determining the positioning initiation terminal in Manner 1, after determining whether terminals that perform the positioning request in the first positioning request are allowed to undergo ranging/sidelink positioning, the first network element determines the positioning initiation terminal from the terminals that allow the ranging/sidelink positioning; and when the privacy configuration data of the positioning initiation terminal indicates that the user needs to be notified or the user needs to verify whether to allow the positioning, the positioning notification or verification for the positioning initiation terminal has been completed. Therefore, in the process of performing ranging/sidelink positioning on the terminal, the second positioning request generated by the first network element may not include the sixth privacy check indication information for the positioning initiation terminal.

The following describes the solution in Embodiment 3 of this application by using several examples.

### Example 5:

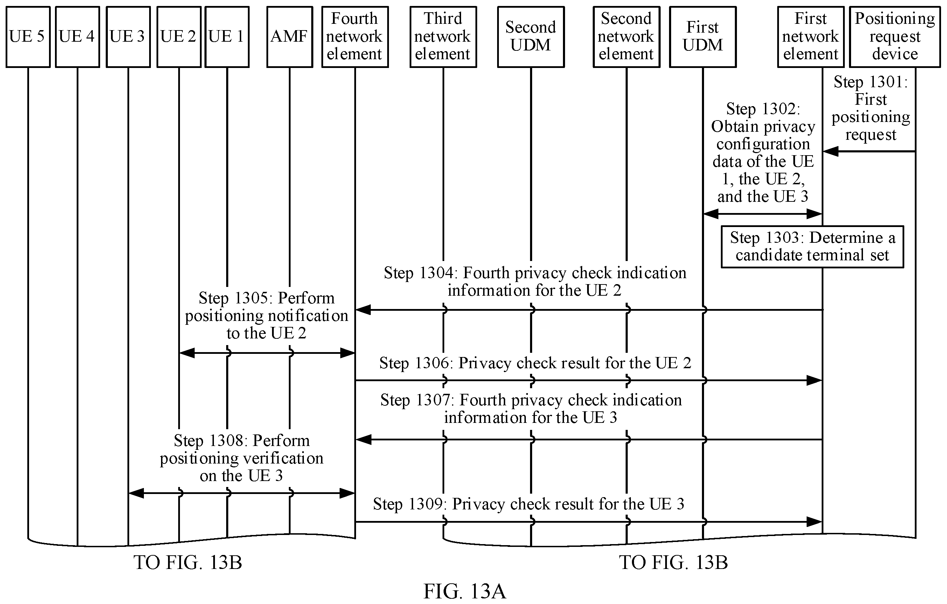

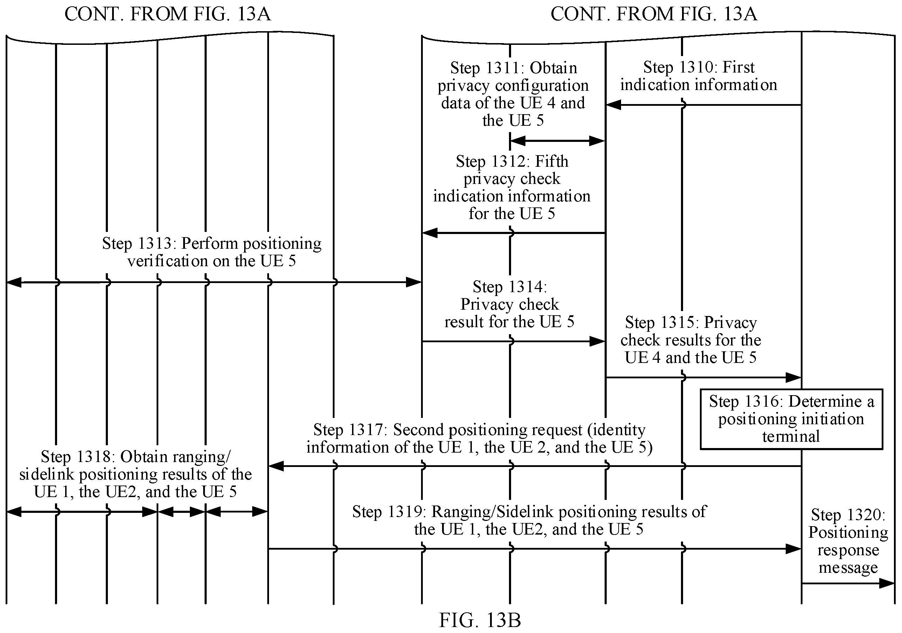

FIG. 13A and FIG. 13B are a schematic flowchart of a communication method according to an embodiment of this application. The communication method may include the following steps.

Step 1301: A positioning request device sends a first positioning request to a first network element. Correspondingly, the first network element receives the first positioning request.

In Example 5, an example in which the first positioning request includes identity information of a UE 1, a UE 2, a UE 3, a UE 4, and a UE 5 is used for description. The UE 1, the UE 2, the UE 3, and the first network element belong to a first PLMN, and the UE 4 and the UE 5 belong to a second PLMN.

It should be noted that, that the first positioning request includes the identity information of the UE 1, the UE 2, the UE 3, the UE 4, and the UE 5 is an example of the first positioning request. The first positioning request may include identity information of at least two terminals. A specific quantity of pieces of the identity information of the terminals included in the first positioning request is not limited in embodiments of this application. For example, a quantity of pieces of the identity information of the terminals included in the first positioning request may alternatively be greater than or less than 5.

Optionally, the first network element may be a GMLC network element in the first PLMN.

Step 1302: The first network element sends a data request to a first UDM, and obtains privacy configuration data of the UE 1, the UE 2, and the UE 3 from the first UDM. The data request includes the identity information of the UE 1, the UE 2, and the UE 3.

The first UDM and the first network element belong to the first PLMN.

For example, the privacy configuration data of the UE 1 indicates that positioning is allowed, the privacy configuration data of the UE 2 indicates that positioning is allowed and a user needs to be notified, and the privacy configuration data of the UE 3 indicates that a user needs to verify whether to allow positioning.

Optionally, the first network element may further obtain addresses of serving AMF network elements of the UE 1, the UE 2, and the UE 3 from the first UDM.

For a specific implementation of step 1302, refer to the foregoing descriptions of obtaining the privacy configuration data of the second terminal by the first network element.

Step 1303: The first network element determines a candidate terminal set.

A candidate terminal in the candidate terminal set may meet at least one of the following conditions:
Condition 1: Privacy configuration data of the candidate terminal indicates that user notification or verification for the positioning is required.
Condition 2: The first network element obtains identity information of a serving AMF network element of the candidate terminal.

For example, the first network element determines that the candidate terminal set includes the UE 2 and the UE 3.

Step 1304: The first network element sends fourth privacy check indication information for the UE 2 to a fourth network element.

The fourth network element may be a serving AMF of the UE 2; or when the UE 2 is roaming, the fourth network element is a GMLC network element in a roaming network of the UE 2.

For example, the fourth privacy check indication information may be carried in a privacy notification service (Namf_Location_privacy_notification) message. The fourth privacy check indication information indicates that the current first positioning request is only used to perform positioning notification or verification on the terminal, and measurement and calculation related to ranging/sidelink positioning do not need to be performed.

When the fourth network element is the AMF network element, the AMF network element skips a positioning measurement and calculation procedure based on fifth privacy check indication information. For example, an LMF is not selected, and measurement and calculation of a sidelink positioning/ranging service are not performed.

Step 1305: The fourth network element performs positioning notification to the UE 2.

For example, if the privacy configuration data of the UE 2 indicates that the positioning is allowed and the user needs to be notified, the fourth network element sends a positioning notification message to the UE 2, to notify the user of performing positioning.

Step 1306: The fourth network element sends a privacy check result for the UE 2 to the first network element.

For example, the privacy check result for the UE 2 sent by the fourth network element to the first network element may indicate that the UE 2 verifies that the notification has been received.

Step 1307: The first network element sends fourth privacy check indication information for the UE 3 to the fourth network element.

The fourth network element may be a serving AMF of the UE 3; or when the UE 2 is roaming, the fourth network element is a GMLC network element in a roaming network of the UE 3.

For example, for a manner of sending the fourth privacy check indication information, refer to the descriptions in step 1304.

Step 1308: The fourth network element performs positioning verification on the UE 3.

For example, if the privacy configuration data of the UE 2 indicates that the user needs to verify whether to allow the positioning, the fourth network element sends a query request to the UE 2, to query whether the user allows the positioning; and correspondingly, the UE 2 sends, to the fourth network element, a check result indicating whether the positioning is allowed.

Step 1309: The fourth network element sends a privacy check result for the UE 3 to the first network element.

The privacy check result is a result of the positioning verification performed on the UE 3. For example, if the privacy configuration data of the UE 2 indicates that the user needs to verify whether to allow the positioning, the UE 3 sends, to the fourth network element, the check result indicating whether the positioning is allowed. The privacy check result sent by the fourth network element to the first network element may indicate that the positioning is allowed or the positioning is not allowed.

It should be noted that a sequence of performing step 1304 to step 1306 and step 1307 to step 1309 is not limited in this embodiment.

Step 1310: The first network element sends first indication information to a second network element, where the first indication information indicates to obtain privacy data of the UE 4 and the UE 5.

The second network element belongs to the second PLMN. Optionally, the second network element may be a GMLC network element in the second PLMN.

For example, the first indication information may be sent via a Ngmlc_Location_PrivacyCheck service message.

Step 1311: The second network element sends a data request to a second UDM, and obtains privacy configuration data of the UE 4 and the UE 5 from the second UDM. The data request includes the identity information of the UE 4 and the UE 5.

Optionally, based on step 1304, the second network element may further obtain addresses of serving AMF network elements of the UE 4 and the UE 5 from the second UDM.

For example, the privacy configuration data of the UE 4 indicates that positioning is not allowed, and the privacy configuration data of the UE 5 indicates that a user needs to verify whether to allow positioning.

Step 1312: The second network element sends fifth privacy check indication information for the UE 5 to a third network element.

The third network element may be a serving AMF network element of the UE 5; or when the UE 5 is roaming, the third network element is a GMLC network element in a roaming network of the UE 5.

For example, the fifth privacy check indication information may be carried in a privacy notification service (Namf_Location_privacy_notification) message. The fifth privacy check indication information indicates that the current first positioning request is only used to perform positioning notification or verification on the terminal, and measurement and calculation related to ranging/sidelink positioning do not need to be performed.

When the third network element is the AMF network element, the AMF network element skips a positioning measurement and calculation procedure based on the fifth privacy check indication information. For example, an LMF is not selected, and measurement and calculation of a sidelink positioning/ranging service are not performed.

Step 1313: The third network element performs positioning verification on the UE 5.

For example, if the privacy configuration data of the UE 5 indicates that the user needs to verify whether to allow the positioning, the third network element sends a query request to the UE 5, to query whether the user allows the positioning; and correspondingly, the UE 5 sends, to the third network element, a check result indicating whether the positioning is allowed.

Step 1314: The third network element sends a privacy check result for the UE 5 to the second network element.

The privacy check result is a result of the positioning verification performed on the UE 5. For example, if the privacy configuration data of the UE 5 indicates that the user needs to verify whether to allow the positioning, the UE 5 sends, to the third network element, the check result indicating whether the positioning is allowed. The privacy check result sent by the third network element to the first network element may indicate that the positioning is allowed or the positioning is not allowed.

Step 1315: The second network element sends privacy check results for the UE 4 and the UE 5 to the first network element.

The privacy check result for the UE 4 may be privacy configuration data indicating that the UE 4 is not allowed to be positioned, and the privacy check result for the UE 5 is a privacy check result of the positioning verification performed by the third network element on the UE 5. For example, the privacy check result for the UE 5 indicates that the positioning is allowed.

Step 1312 to step 1315 correspond to content of performing positioning notification or verification by the second network element on the first terminal in Case 2 in the foregoing first solution in which the first network element determines whether the second terminal is allowed to undergo ranging/sidelink positioning.

It should be noted that a sequence of performing step 1310 to step 1315 and step 1304 to step 1309 is not limited.

Step 1316: The first network element determines a positioning initiation terminal.

Optionally, the first network element may determine, as a positioning initiation terminal, a terminal that is in the at least two terminals that request the ranging/sidelink positioning in the first positioning request, is allowed to undergo ranging/sidelink positioning, and obtains address information of a serving AMF network element.

For example, the privacy check result for the UE 2 indicates that the positioning is allowed, the privacy check result for the UE 3 indicates that the positioning is not allowed, the privacy check result for the UE 5 indicates that the positioning is allowed. In addition, because the privacy configuration data of the UE 1 indicates that the positioning is allowed, the privacy configuration data of the UE 4 indicates that the positioning is not allowed, and the first network element may obtain address information of the serving AMF network elements of the UE 1, the UE 2, the UE 3, the UE 4, and the UE 5, the first network element determines a positioning initiation terminal from the UE 1, the UE 2, and the UE 5.

Step 1317: The first network element sends a second positioning request to the AMF network element.

The second positioning request may include the identity information of the UE 1, the UE 2, and the UE 5, and is for requesting to undergo ranging/sidelink positioning on the UE 1, the UE 2, and the UE 5.

Step 1318: The AMF network element performs ranging/sidelink positioning on the UE 1, the UE 2, and the UE 5, and obtains ranging/sidelink positioning results of the UE 1, the UE 2, and the UE 5.

Step 1319: The AMF network element sends the ranging/sidelink positioning results of the UE 1, the UE 2, and the UE 5 to the first network element.

For a specific implementation of step 1317 to step 1319, refer to the foregoing descriptions of performing, by the first network element, ranging/sidelink positioning on the terminal via the AMF network element in Ranging/Sidelink positioning solution 1.

It should be noted that, in a process of performing step 1317 to step 1319, the serving AMF network elements of the UE 1 and the UE 2 is different from that of the UE 5. Therefore, in a process of performing step 1317, the first network element separately sends the second positioning request to the serving AMF network elements of the UE 1 and the UE 2 and the serving AMF network element of the UE 5. In a process of performing step 1318, the serving AMF network elements of the UE 1 and the UE 2 perform ranging/sidelink positioning on the UE 1 and the UE 2, and the serving AMF network element of the UE 5 performs ranging/sidelink positioning on the UE 5; and when the UE 1 is a positioning initiation terminal (to be specific, a distance and/or an angle of the UE 1 relative to the UE 2, a distance and/or an angle of the UE 1 relative to the UE 5, or an absolute location of the UE 1 needs to be determined), the serving AMF network element of the UE 5 sends the ranging/sidelink positioning result to the serving AMF network elements of the UE 1 and the UE 2. In a process of performing step 1319, the serving AMF network elements of the UE 1 and the UE 2 may send the ranging/sidelink positioning results of the UE 1, the UE 2, and the UE 5 to the first network element.

Step 1320: The first network element sends a positioning response message to the positioning request device.

The positioning response message includes the ranging/sidelink positioning results of the UE 1, the UE 2, and the UE 5, and positioning failure cause parameters of the UE 3 and the UE 4.

For a specific implementation of step 1320, refer to the descriptions of the positioning response message in Ranging/Sidelink positioning solution 1.

### Example 6:

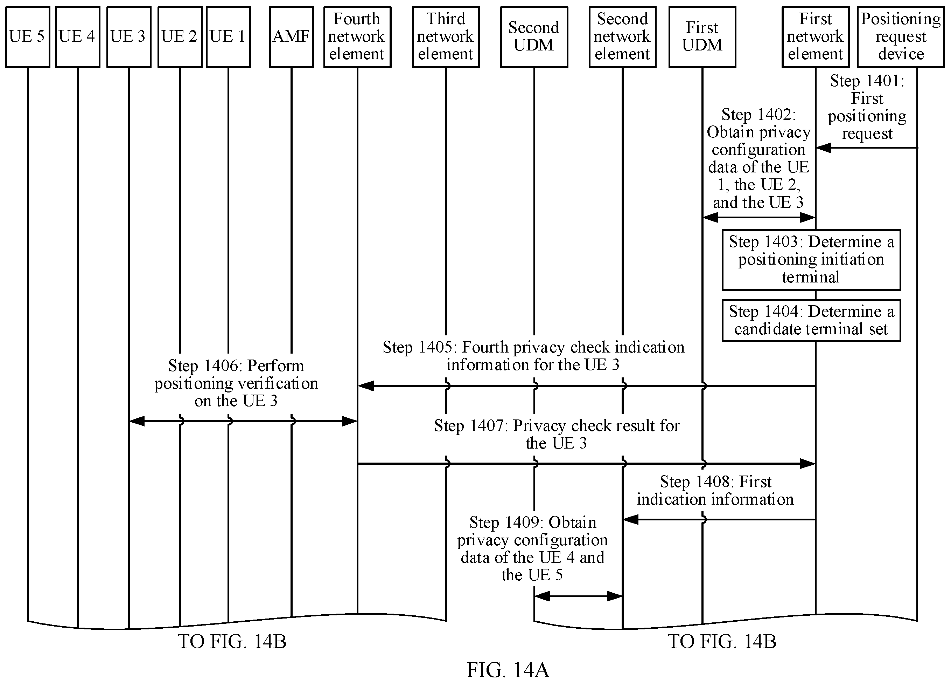

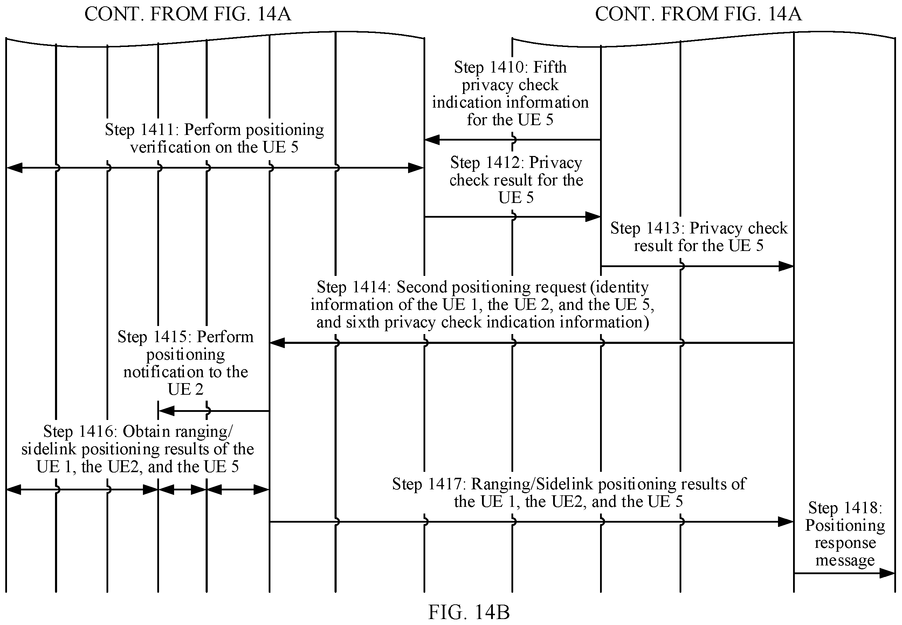

FIG. 14A and FIG. 14B are a schematic flowchart of a communication method according to an embodiment of this application. The communication method may include the following steps.

For step 1401 and step 1402, refer to the descriptions of step 1301 and step 1302 in FIG. 13A and FIG. 13B.

In Example 6, an example in which a first positioning request includes identity information of a UE 1, a UE 2, a UE 3, a UE 4, and a UE 5 is used for description. The UE 1, the UE 2, the UE 3, and a first network element belong to a first PLMN, and the UE 4 and the UE 5 belong to a second PLMN.

For example, privacy configuration data of the UE 1 indicates that positioning is allowed, privacy configuration data of the UE 2 indicates that positioning is allowed and a user needs to be notified, and privacy configuration data of the UE 3 indicates that a user needs to verify whether to allow positioning.

Step 1403: The first network element determines a positioning initiation terminal.

Optionally, the first network element may determine the positioning initiation terminal based on assistance information sent by a positioning request device.

For example, the UE 2 is a positioning initiation terminal.

Step 1404: The first network element determines a candidate terminal set.

A candidate terminal in the candidate terminal set may meet at least one of the following conditions:
Condition 1: Privacy configuration data of the candidate terminal indicates that user notification or verification for the positioning is required.
Condition 2: The first network element obtains identity information of a serving AMF network element of the candidate terminal.
Condition 3: The candidate terminal is not a positioning initiation terminal.

For example, the first network element determines that the candidate terminal set includes the UE 3.

Step 1405: The first network element sends fourth privacy check indication information for the UE 3 to a fourth network element.

The fourth network element may be a serving AMF of the UE 3; or when the UE 3 is roaming, the fourth network element is a GMLC network element in a roaming network of the UE 3.

For example, for a manner of sending the fourth privacy check indication information, refer to the descriptions in step 1304.

Step 1406: The fourth network element performs positioning verification on the UE 3.

For example, if the privacy configuration data of the UE 3 indicates that the user needs to verify whether to allow the positioning, the fourth network element sends a query request to the UE 3, to query whether the user allows the positioning; and correspondingly, the UE 3 sends, to the fourth network element, a check result indicating whether the positioning is allowed.

Step 1407: The fourth network element sends a privacy check result for the UE 3 to the first network element.

The privacy check result is a result of the positioning verification performed on the UE 3. For example, if the privacy configuration data of the UE 3 indicates that the user needs to verify whether to allow the positioning, the UE 3 sends, to the fourth network element, the check result indicating whether the positioning is allowed. The privacy check result sent by the fourth network element to the first network element may indicate that the positioning is allowed or the positioning is not allowed. For example, the privacy check result for the UE 3 may indicate that the positioning is not allowed.

For step 1408 to step 1413, refer to the descriptions of step 1310 to step 1315 in FIG. 13A and FIG. 13B.

Privacy configuration data of the UE 4 indicates that positioning is not allowed, and a privacy check result for the UE 5 is a privacy check result of positioning verification performed by a third network element on the UE 5. For example, the privacy check result for the UE 5 indicates that the positioning is allowed.

It should be noted that a sequence of performing step 1408 to step 1413 and step 1405 to step 1407 is not limited.

Step 1414: The first network element sends a second positioning request to the AMF network element.

The second positioning request may include the identity information of the UE 1, the UE 2, and the UE 5, and is for requesting to undergo ranging/sidelink positioning on the UE 1, the UE 2, and the UE 5.

Optionally, the second positioning request includes sixth privacy check indication information for the UE 2, indicating to perform positioning notification to the UE 2.

Step 1415: The AMF network element performs positioning notification to the UE 2.

For example, if the privacy configuration data of the UE 2 indicates that the positioning is allowed and the user needs to be notified, the AMF network element sends a positioning notification message to the UE 2, to notify the user of performing positioning.

Correspondingly, the AMF network element may receive a privacy check result for the UE 2. For example, the privacy check result for the UE 2 may indicate that the UE 2 verifies that the notification has been received.

Step 1416: The AMF network element performs ranging/sidelink positioning on the UE 1, the UE 2, and the UE 5, and obtains ranging/sidelink positioning results of the UE 1, the UE 2, and the UE 5.

Step 1417: The AMF network element sends the ranging/sidelink positioning results of the UE 1, the UE 2, and the UE 5 to the first network element.

The AMF network element performs ranging/sidelink positioning on the UE 1, the UE 2, and the UE 5, and obtains the ranging/sidelink positioning results of the UE 1, the UE 2, and the UE 5.

It should be noted that a serving AMF network element of the UE 5 is different from serving AMF network elements of the UE 1 and the UE 2. Therefore, in a process of performing step 1414, the first network element separately sends the second positioning request to the serving AMF network element of the UE 5, and the serving AMF network elements of the UE 1 and the UE 2. In a process of performing step 1415, the serving AMF network element of the UE 2 performs positioning notification to the UE 2. In a process of performing step 1416, the serving AMF network element of the UE 5 performs ranging/sidelink positioning on the UE 5, and the serving AMF network elements of the UE 1 and the UE 2 perform ranging/sidelink positioning on the UE 1 and the UE 2; and when the UE 2 is a positioning initiation terminal (to be specific, a distance and/or an angle of the UE 2 relative to the UE 1, a distance and/or an angle of the UE 2 relative to the UE 5, or an absolute location of the UE 2 needs to be determined), the serving AMF network element of the UE 5 sends the ranging/sidelink positioning result to the serving AMF network element of the UE 2. In a process of performing step 1417, the serving AMF network element of the UE 2 may send the ranging/sidelink positioning results of the UE 1, the UE 2, and the UE 5 to the first network element.

Step 1418: The first network element sends a positioning response message to the positioning request device.

The positioning response message includes the ranging/sidelink positioning results of the UE 1, the UE 2, and the UE 5, and positioning failure cause parameters of the UE 3 and the UE 4.

For a specific implementation of step 1418, refer to the descriptions of the positioning response message in Ranging/Sidelink positioning solution 1.

It may be understood that the network elements in the foregoing embodiments may perform some or all of the steps in embodiments. These steps or operations are merely examples. Other operations or variations of various operations may be further performed in embodiments of this application. In addition, the steps may be performed in a sequence different from a sequence shown in embodiments, and not all of operations in embodiments of this application may be performed. In addition, sequence numbers of the steps do not mean an execution sequence. An execution sequence of the processes should be determined based on functions and internal logic of the processes, and should not constitute any limitation on the implementation processes of embodiments of this application.

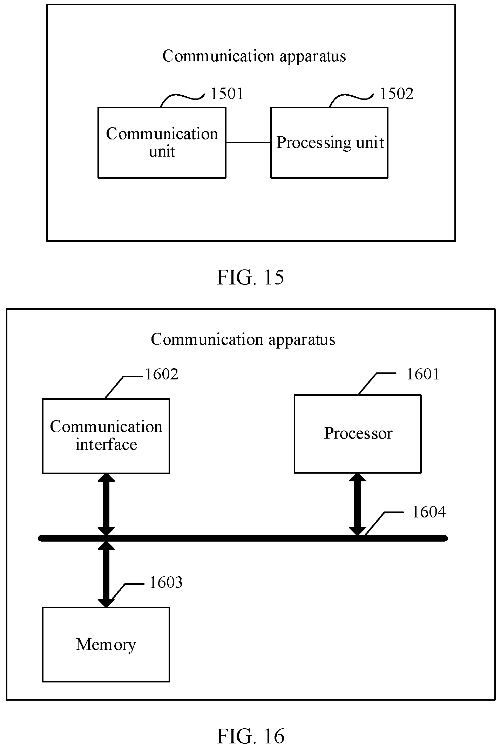

Based on a same inventive concept as the method embodiments, an embodiment of this application provides a communication apparatus. A structure of the communication apparatus may be shown in FIG. 15, and includes a communication unit 1501 and a processing unit 1502. The communication apparatus may be specifically configured to implement the method performed by the first network element, the second network element, or the AMF network element in the foregoing embodiments. The apparatus may be the network element, or may be a chip or a chipset in the network element, or a part that is of a chip and that is configured to perform a related method function. The communication unit 1501 is configured to: receive and send data/signaling, and the processing unit 1502 is configured to process the data/signaling, to implement functions performed by the foregoing network elements.

In embodiments of this application, division into the units is an example, is merely logical function division, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional module. It may be understood that for functions or implementations of the units in embodiments of this application, further refer to the related descriptions in the method embodiments.

In a possible manner, the communication apparatus may be shown in FIG. 16. The apparatus may be a communication device or a chip in the communication device. The communication device may be the first network element, the second network element, or the AMF network element in the foregoing embodiments. The apparatus includes a processor 1601 and a communication interface 1602, and may further include a memory 1603.

The processor 1601 may be a CPU, a digital processing unit, or the like. The communication interface 1602 may be a transceiver, an interface circuit like a transceiver circuit, a transceiver chip, or the like. The apparatus further includes a memory 1603, configured to store a program executed by the processor 1601. The memory 1603 may be a nonvolatile memory such as a hard disk drive (hard disk drive, HDD) or a solid-state drive (solid-state drive, SSD), or may be a volatile memory (volatile memory) such as a random access memory (random-access memory, RAM). The memory 1603 is any other medium that can be used to carry or store expected program code in a form of an instruction or a data structure and that can be accessed by a computer, but is not limited thereto.

The processor 1601 is configured to execute the program code stored in the memory 1603, and is specifically configured to perform an action of the processing unit 1502. The communication interface 1602 is specifically configured to perform an action of the communication unit 1501. Details are not described herein again in this application.

In this embodiment of this application, a specific connection medium between the communication interface 1602, the processor 1601, and the memory 1603 is not limited. In this embodiment of this application, the memory 1603, the processor 1601, and the communication interface 1602 are connected through a bus 1604 in FIG. 16. The bus is represented by using a bold line in FIG. 16. The foregoing is merely an example for description. A connection manner of other components is not limited thereto. The bus may be classified into an address bus, a data bus, a control bus, and the like. For ease of representation, only one bold line is used to represent the bus in FIG. 16, but this does not mean that there is only one bus or only one type of bus.

An embodiment of this application further provides a computer-readable storage medium, configured to store computer software instructions that need to be executed by the foregoing processor. The computer software instructions include a program that needs to be executed by the foregoing processor.

An embodiment of this application further provides a computer program product, including a computer program that needs to be executed by the foregoing processor.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. In this way, if these modifications and variations to this application fall within the scope of the claims of this application and their equivalent technologies, this application is also intended to cover these modifications and variations.

## Claims

1. A communication method, wherein the method comprises:
receiving, by a first network element, a first positioning request, wherein the first positioning request comprises identity information of a first terminal that belongs to a public land mobile network PLMN different from that of the first network element, and the first positioning request is for requesting a ranging/sidelink positioning result associated with the first terminal; and
obtaining, by the first network element, privacy data of the first terminal via a second network element in the PLMN to which the first terminal belongs, wherein the privacy data of the first terminal is used to determine whether the first terminal is allowed to undergo ranging/sidelink positioning.

2. The method according to claim 1, wherein the first positioning request further comprises identity information of a second terminal that belongs to a PLMN the same as that of the first network element, and the first positioning request is for requesting ranging/sidelink positioning results of the first terminal and the second terminal; and the method further comprises:
obtaining, by the first network element, privacy data of the second terminal, wherein the privacy data of the second terminal is used to determine whether the second terminal is allowed to undergo ranging/sidelink positioning.

3. The method according to claim 1, wherein the method further comprises:
determining, by the first network element based on the identity information of the first terminal, the PLMN to which the first terminal belongs; or
determining, by the first network element based on PLMN identity information that corresponds to the first terminal and that is comprised in the first positioning request, the PLMN to which the first terminal belongs.

4. The method according to any one of claims 1 to 3, wherein the obtaining, by the first network element, the privacy data of the first terminal via the second network element in the PLMN to which the first terminal belongs comprises:
sending, by the first network element, first indication information to the second network element, wherein the first indication information indicates to obtain the privacy data of the first terminal; and
receiving, by the first network element, the privacy data of the first terminal from the second network element.

5. The method according to any one of claims 1 to 4, wherein the privacy data of the first terminal comprises privacy configuration data of the first terminal.

6. The method according to claim 5, wherein the first network element determines, in the following manner, whether the first terminal is allowed to undergo ranging/sidelink positioning:
if the privacy configuration data of the first terminal indicates that user notification or verification for the positioning is required, the first network element determines that the first terminal is not allowed to undergo ranging/sidelink positioning.

7. The method according to claim 5, wherein the first network element determines, in the following manner, whether the first terminal is allowed to undergo ranging/sidelink positioning:
when the privacy configuration data of the first terminal indicates that user notification or verification for the positioning is required, the first network element sends first privacy check indication information for the first terminal to a third network element, wherein the first privacy check indication information indicates to perform positioning notification or verification on the first terminal; and
the first network element receives a privacy check result from the third network element, and determines whether the first terminal is allowed to undergo ranging/sidelink positioning, wherein the privacy check result represents a result of the positioning notification or verification performed on the first terminal.

8. The method according to any one of claims 1 to 3, wherein the privacy data of the first terminal comprises a privacy check result for the first terminal, and the privacy check result represents a result of positioning notification or verification performed on the first terminal.

9. The method according to any one of claims 1 to 8, wherein the first network element is a gateway mobile location center GMLC network element.

10. The method according to claim 7, wherein the third network element is an access and mobility management function AMF network element, or the third network element is a GMLC network element in a roaming network of the first terminal.

11. A communication method, wherein the method comprises:
receiving, by a second network element, first indication information from a first network element, wherein the first indication information indicates to obtain privacy data of a first terminal; and a first positioning request received by the first network element comprises identity information of the first terminal, the first positioning request is for requesting a ranging/sidelink positioning result associated with the first terminal, and the first terminal belongs to a public land mobile network PLMN different from that of the first network element; and
sending, by the second network element, the privacy data of the first terminal to the first network element, wherein the privacy data of the first terminal is used to determine whether the first terminal is allowed to undergo ranging/sidelink positioning.

12. The method according to claim 11, wherein the first positioning request further comprises identity information of a second terminal that belongs to a PLMN the same as that of the first network element, and the first positioning request is for requesting ranging/sidelink positioning results of the first terminal and the second terminal.

13. The method according to claim 11 or 12, wherein the privacy data of the first terminal comprises privacy configuration data of the first terminal.

14. The method according to claim 11 or 12, wherein the privacy data of the first terminal comprises a privacy check result for the first terminal, and the privacy check result represents a result of positioning notification or verification performed on the first terminal.

15. The method according to claim 14, wherein the second network element determines the privacy check result for the first terminal in the following manner:
when privacy configuration data of the first terminal indicates that user notification or verification for the positioning is required, the second network element sends second privacy check indication information for the first terminal to a third network element, wherein the second privacy check indication information indicates to perform positioning notification or verification on the first terminal; and
the second network element receives the privacy check result from the third network element.

16. The method according to claim 15, wherein the third network element is an access and mobility management function AMF network element, or the third network element is a gateway mobile location center GMLC network element in a roaming network of the first terminal.

17. A communication method, wherein the method comprises:
receiving, by an access and mobility management function AMF network element, privacy check indication information for a first terminal from a positioning network element, wherein the privacy check indication information indicates to perform positioning notification or verification on the first terminal;
skipping, by the AMF network element, positioning measurement based on the privacy check indication information; and
sending, by the AMF network element, a privacy check result to the positioning network element, wherein the privacy check result represents a result of the positioning notification or verification performed on the first terminal.

18. The method according to claim 17, wherein the positioning network element comprises a first network element or a second network element, wherein
the first network element is a network element that receives a first positioning request, the first positioning request comprises identity information of the first terminal, the first positioning request is for requesting a ranging/sidelink positioning result associated with the first terminal, and the first network element belongs to a public land mobile network PLMN different from that of the first terminal; and
the second network element is a network element in the PLMN to which the first terminal belongs.

19. A communication method, wherein the method comprises:
receiving, by a first network element, a first positioning request, wherein the first positioning request comprises identity information of at least two terminals; and the first positioning request is for requesting ranging/sidelink positioning results of the at least two terminals; and
generating, by the first network element, a second positioning request based on a terminal in the at least two terminals that is allowed to undergo ranging/sidelink positioning and a terminal in the at least two terminals that is not allowed to undergo ranging/sidelink positioning, wherein the second positioning request is for requesting a ranging/sidelink positioning result of the terminal in the at least two terminals that is allowed to undergo ranging/sidelink positioning.

20. The method according to claim 19, wherein the second positioning request does not comprise identity information of the terminal in the at least two terminals that is not allowed to undergo ranging/sidelink positioning.

21. The method according to claim 19 or 20, wherein the method further comprises:
sending, by the first network element, a positioning response message to a positioning request device, wherein the positioning response message comprises a positioning failure cause parameter of the terminal in the at least two terminals that is not allowed to undergo ranging/sidelink positioning.

22. A communication method, wherein the method comprises:
receiving, by a first network element, a first positioning request, wherein the first positioning request comprises identity information of at least two terminals, and the first positioning request is for requesting ranging/sidelink positioning results of the at least two terminals;
sending, by the first network element, fourth privacy check indication information for a candidate terminal in the at least two terminals to a fourth network element, wherein the fourth privacy check indication information indicates to perform positioning notification or verification on the candidate terminal; and privacy configuration data of the candidate terminal indicates that user notification or verification for the positioning is required; and
receiving, by the first network element, a privacy check result from the fourth network element, wherein the privacy check result represents a result of the positioning notification or verification performed on the candidate terminal.

23. The method according to claim 22, wherein the at least two terminals comprise a second terminal, the second terminal and the first network element belong to a same public land mobile network PLMN, and the method further comprises:
obtaining, by the first network element, privacy configuration data of the second terminal; and
determining, by the first network element as a candidate terminal based on the privacy configuration data of the second terminal, the second terminal whose privacy configuration data indicates that user notification or verification for the positioning is required.

24. The method according to claim 22 or 23, wherein the method further comprises:
determining, by the first network element, a positioning initiation terminal, wherein the positioning initiation terminal is a terminal that performs an initiated ranging/sidelink positioning service, and the positioning initiation terminal is a terminal in the at least two terminals that is allowed to undergo ranging/sidelink positioning.

25. The method according to claim 24, wherein the determining, by the first network element, the positioning initiation terminal comprises:
determining, by the first network element as the positioning initiation terminal, a terminal in the at least two terminals that is allowed to undergo ranging/sidelink positioning and obtains address information of a serving AMF network element.

26. The method according to any one of claims 22 to 25, wherein the sending, by the first network element, the fourth privacy check indication information for the candidate terminal in the at least two terminals to the fourth network element comprises:
sending, by the first network element, a privacy notification service message for the candidate terminal to the fourth network element, wherein the privacy notification service message comprises identity information of the candidate terminal and the fourth privacy check indication information.

27. The method according to any one of claims 22 to 26, wherein the fourth network element is a serving access and mobility management function AMF network element of the candidate terminal, or the fourth network element is a GMLC network element in a roaming network of the candidate terminal.

28. A communication apparatus, comprising a module configured to perform the method according to any one of claims 1 to 10, a module configured to perform the method according to any one of claims 11 to 16, a module configured to perform the method according to claim 17 or 18, a module configured to perform the method according to any one of claims 19 to 21, or a module configured to perform the method according to any one of claims 22 to 27.

29. A communication apparatus, comprising a processor and a memory, wherein
the processor is configured to execute a computer program or instructions stored in the memory, to cause the communication apparatus to implement the method according to any one of claims 1 to 10, to cause the communication apparatus to implement the method according to any one of claims 11 to 16, to cause the communication apparatus to implement the method according to claim 17 or 18, to cause the communication apparatus to implement the method according to any one of claims 19 to 21, or to cause the communication apparatus to implement the method according to any one of claims 22 to 27.

30. A computer-readable storage medium, storing a computer program or instructions, wherein when the computer program or the instructions are run on a computer, the computer-readable storage medium is caused to implement the method according to any one of claims 1 to 10, the computer-readable storage medium is caused to implement the method according to any one of claims 11 to 16, the computer-readable storage medium is caused to implement the method according to claim 17 or 18, the computer-readable storage medium is caused to implement the method according to any one of claims 19 to 21, or the computer-readable storage medium is caused to implement the method according to any one of claims 22 to 27.

31. A computer program product, comprising a computer program, wherein when the computer program is executed by a communication apparatus, the method according to any one of claims 1 to 10 is implemented; when the computer program is executed by a communication apparatus, the method according to any one of claims 11 to 16 is implemented; when the computer program is executed by a communication apparatus, the method according to claim 17 or 18 is implemented; when the computer program is executed by a communication apparatus, the method according to any one of claims 19 to 21 is implemented, or the computer-readable storage medium is caused to implement the method according to any one of claims 22 to 27.

32. A communication system, comprising a first network element configured to perform the method according to any one of claims 1 to 10, a second network element configured to perform the method according to any one of claims 11 to 16, and an access and mobility management function AMF network element configured to perform the method according to claim 17 or 18.

33. A chip system, comprising: a processor, wherein the processor is configured to perform the method according to any one of claims 1 to 10, the method according to any one of claims 11 to 16, the method according to claim 17 or 18, the method according to any one of claims 19 to 21, or the computer-readable storage medium is caused to implement the method according to any one of claims 22 to 27.
